(19) Europäisches Patentamt
European Patent Office
Office européen des brevets

(11) Veröffentlichungsnummer: **0 374 752 B1**

# (12) EUROPÄISCHE PATENTSCHRIFT

(45) Veröffentlichungstag der Patentschrift: **25.01.95**

(51) Int. Cl.$^6$: **C08F 220/22**, C08F 251/00, G02B 1/04

(21) Anmeldenummer: **89123225.8**

(22) Anmeldetag: **15.12.89**

## (54) Hydrogele auf der Basis von fluorhaltigen und Saccharid-Monomeren.

(30) Priorität: **19.12.88 DE 3842752**

(43) Veröffentlichungstag der Anmeldung:
**27.06.90 Patentblatt 90/26**

(45) Bekanntmachung des Hinweises auf die Patenterteilung:
**25.01.95 Patentblatt 95/04**

(84) Benannte Vertragsstaaten:
**AT BE CH DE ES FR GB GR IT LI LU NL SE**

(56) Entgegenhaltungen:
**EP-A- 0 100 381**
**GB-A- 2 091 750**
**GB-A- 2 097 952**

(73) Patentinhaber: **CIBA-GEIGY AG**
**Klybeckstrasse 141**
**CH-4002 Basel (CH)**

(72) Erfinder: **Kossmehl, Gerhard, Prof. Dr.**
**Grabenstrasse 38F**
**D-1000 Berlin-Lichterfelde 45 (DE)**
Erfinder: **Schäfer, Horst, Dr.**
**Wiesenau 2**
**D-8750 Aschaffenburg 19 (DE)**
Erfinder: **Klaus, Norbert**
**Lindenstrasse 79**
**D-1000 Berlin 61 (DE)**
Erfinder: **Volkheimer, Jürgen**
**Leipziger Strasse 10**
**D-6200 Wiesbaden (DE)**
Erfinder: **Rezaii-Djafari, Madjid**
**Sigmaringer Strasse 26**
**D-1000 Berlin 31 (DE)**

(74) Vertreter: **Zumstein, Fritz, Dr. et al**
**Patentanwälte,**
**Dr. F. Zumstein,**
**Dipl.-Ing. F. Klingseisen,**
**Bräuhausstrasse 4**
**D-80331 München (DE)**

EP 0 374 752 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Hydrogele, Verfahren zu ihrer Herstellung, Verwendungen der Hydrogele, z.B. als Kontaktlinsen, Intraokularlinsen oder in anderen Anwendungsgebieten, bei denen biologisch verträgliche Materialien erforderlich sind, sowie vorstehend genannte Gegenstände bestehend im wesentlichen aus den neuen Hydrogelen. Die neuen Hydrogele zeichnen sich durch besondere Vorteile bezüglich z.B. Sauerstoffdurchlässigkeit, Wassergehalt und mechanische Stabilität aus.

Es ist bekannt, dass Hydrogele (in Wasser begrenzt quellbare vernetzte Polymere) eine Sauerstoffdurchlässigkeit besitzen, die vom Wassergehalt abhängt. Sie nimmt mit steigendem Wassergehalt zu. Ferner ist bekannt, dass Polymere, die fluorhaltige Baueinheiten enthalten und solche, die auf der Basis von Polysiloxanen aufgebaut sind, sich durch besonders hohe Sauerstoffdurchlässigkeiten auszeichnen. Allerdings ist der Wassergehalt von Polymeren, die ganz oder vorwiegend aus den beiden zuletzt genannten Stoffgruppen bestehen, niedrig. Die grundsätzlich erwünschte hohe Sauerstoffdurchlässigkeit wird bei den bekannten Polymeren normalerweise dadurch erreicht, dass andere schwerwiegende Nachteile in Kauf genommen werden. So weisen Hydrogele mit hohem Wassergehalt normalerweise eine geringe mechanische Stabilität, wie z.B. Reissfestigkeit, auf. Polymere aus Silikonen oder fluorhaltigen Materialien sind stark hydrophob und entsprechend schlecht geeignet für den Einsatz als z.B. Kontaktlinsen.

Kontaktlinsen, die resistent gegen Proteinablagerungen sind und eine gute Formstabilität aufweisen, sind z.B. in EP 100 381 beschrieben. Diese Kontaktlinsen sind erhältlich aus einer Zusammensetzung aus fluorierten Methacrylaten und einer oder mehreren Verbindungen ausgewählt aus einer ungesättigten Carbonsäure oder einem Monomethacrylat von einem Polyhydroxyalkohol und einem Alkylmethacrylat.

In den britischen Patenten GB 2 097 952 und GB 2 091 750 wird die Herstellung einer Kontaktlinse mit guter Sauerstoffdurchlässigkeit beschrieben, die erhältlich ist durch Polymerisation einer Monomerenmischung aus ketalisiertem Saccharid oder Glycitol und einem hydrophilen und/oder hydrophoben Monomer, wobei anschliessend die Ketalschutzgruppen der Kontaktlinse mit Säure abgespalten werden.

Die vorliegende Erfindung schafft hier Abhilfe, indem Hydrogele offenbart werden, die durch entsprechende Materialauswahl eine äusserst günstige Kombination von Eigenschaften aufweisen. Insbesondere kann die Sauerstoffdurchlässigkeit unabhängig voneinander sowohl durch Steuerung des Fluorgehaltes als auch durch Steuerung des Wassergehaltes beeinflusst werden.

Die Erfindung betrifft ein Hydrogel, welches ein Copolymer aus einem polymerisierbaren Monomerengemisch ist, das

a) 2-85 Mol-% eines hydrophoben Vinylmonomeren mit mindestens drei Fluoratomen,

b) 2-80 Mol-% eines hydrophoben Polyhydroxyvinylmonomeren, dessen Hydroxygruppen in geschützter Form vorliegen,

c) 2-70 Mol-% eines hydrophilen Vinylmonomeren und,

d) bezogen auf die Gesamtmenge der Monomere a)-c), 0-5 Mol-% eines Vernetzers enthält, in welchem Hydrogel die Hydroxygruppen der durch die Monomere b) gebildeten Segmente in geschützter oder in freier Form vorliegen.

Das hydrophobe Vinylmonomer mit mindestens 3 Fluoratomen a) ist insbesondere ausgewählt unter den Verbindungen der Formel I,

$$H_2C=C(R^1)-COO(CH_2)_n(CF_2)_mCF_2X \quad (I)$$

worin $R^1$ Wasserstoff oder Methyl bedeutet,

n für eine Zahl von 1 bis 4 steht,

m für eine Zahl von 0 bis 19 steht,

X Wasserstoff oder Fluor ist; mit der Massgabe, dass X für Fluor steht, wenn m 0 bedeutet; sowie unter Hexafluorisopropylacrylat, Hexafluorisopropylmethacrylat und 2,3,4,5,6-Pentafluorstyrol. Als Monomer a) kann eines der vorstehend definierten Monomere verwendet werden oder eine Mischung von mehreren dieser Monomere.

Der Anteil des Vinylmonomeren a) am Monomerengemisch beträgt bevorzugt 10-80 Mol-%, besonders bevorzugt 20-60 Mol-% und in einer speziellen Ausführungsform 30 Mol-%.

Bevorzugte Monomere der Formel I sind solche, worin $R^1$ für Methyl steht, n 1 oder 2 bedeutet, m für 1 bis 4 steht und X Fluor bedeutet.

Beispiele für fluorhaltige Monomere der Formel I sind 2,2,3,3,4,4,4-Heptafluorbutylacrylat und -methacrylat (auch als Heptafluorpropyl-methylacrylat bzw. -methacrylat bezeichnet), Nonafluorbutyl-methyl- und -ethyl-acrylat und -methacrylat, $C_6F_{13}$-Methyl- und -Ethylacrylat und -methacrylat, $C_8F_{17}$- und $C_{10}F_{21}$-Methyl- und Ethyl-acrylat und -methacrylat. Besonders bevorzugt ist 2,2,3,3,4,4,4-Heptafluorbutylmethacrylat ($F_7$BuMA).

Das Polyhydroxyvinylmonomere b), dessen Hydroxygruppen in geschützter Form vorliegen, ist ein Vinylmonomer, das von einem Saccharid oder einem Zuckeralkohol abgeleitet ist. Es weist insbesondere entweder die Formel II auf,

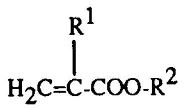

(II)

worin $R^1$ für Wasserstoff oder Methyl steht und $R^2$ einen Saccharidrest bedeutet, dessen Hydroxygruppen in geschützter Form vorliegen, oder die Formel III,

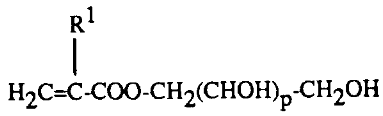

(III)

worin $R^1$ für Wasserstoff oder Methyl steht, p für eine Zahl von 1 bis 8 steht und worin die Hydroxygruppen in geschützter Form vorliegen. Als Monomer b) kann eines der vorstehend definierten Monomere verwendet werden oder eine Mischung von mehreren dieser Monomere.

Der Anteil der Vinylmonomere b) am Monomerengemisch beträgt bevorzugt 10-70 Mol-%, besonders bevorzugt 20-60 Mol-% und in einer speziellen Ausführungsform 30 Mol-%.

Bei den Saccharidresten $R^2$ in den Vinylmonomeren der Formel II handelt es sich vorzugsweise um Reste von Monosacchariden mit 4 bis 6 Kohlenstoffatomen, deren Hydroxygruppen in geschützter Form vorliegen. Beispiele solcher Monosaccharide sind Erythrose, Threose, Arabinose, Ribose, Xylose, Glucose, Mannose, Galactose, Fructose und Sorbose. Dabei ist es unerheblich, in welcher Konfiguration diese Saccharidreste vorliegen, beispielsweise als Furanosid oder als Pyranosid.

Bei dem von einem Zuckeralkohol abgeleiteten Vinylmonomer der Formel III, worin die Hydroxygruppen in geschützter Form vorliegen, bedeutet p vorzugsweise eine Zahl von 2 bis 4. Ferner umfasst diese Formel alle denkbaren Stellungsisomere. Beispiele von Zuckeralkoholen, von denen Verbindungen der Formel III abgeleitet sind, sind Xylit, Adonit, Arabit, Sorbit, Mannit oder Dulcit.

Die Hydroxygruppen der Verbindungen der Formel II und III, die in geschützter Form vorliegen, sind vorzugsweise zu zweien als säurelabile Ketale geschützt, beispielsweise und bevorzugt als Additionsprodukte mit einem Keton. Zwei Hydroxygruppen, die gemeinsam als Ketal geschützt sind, sind beispielsweise zusammen mittels einer vorzugsweise substituierten Methylengruppe, wie durch Niederalkyliden, z.B. Isopropyliden, Cycloalkyliden, z.B. Cyclohexyliden, oder Benzyliden geschützt.

Besonders bevorzugte Vertreter der Vinylmonomere der Formel II sind 3-O-Acryloyl-1,2;5,6-di-O-isopropyliden-α-D-(-)-glucofuranose (3-ADPGlu) der Formel IIa ($R^1$ = H),

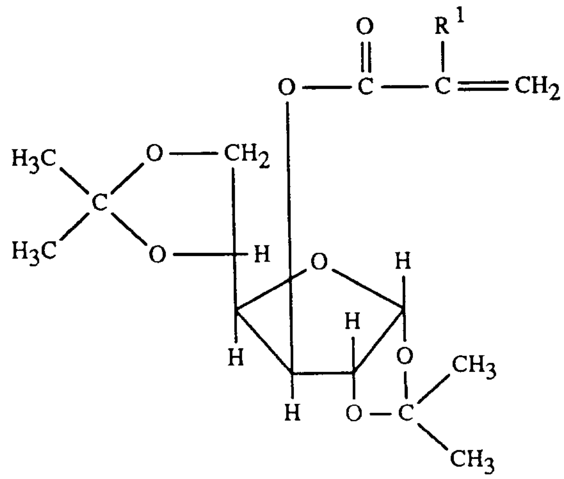

(IIa)

1-O-Methacryloyl-2,3;4,5-di-O-isopropyliden-β-D-(-)-fructopyranose (1-MDPFru) der Formel IIb ($R^1$ = Methyl) und

1-O-Acryloyl-2,3;4,5-di-O-isopropyliden-β-D-(-)-fructopyranose (1-ADPFru) der Formel IIb ($R^1$ = H),

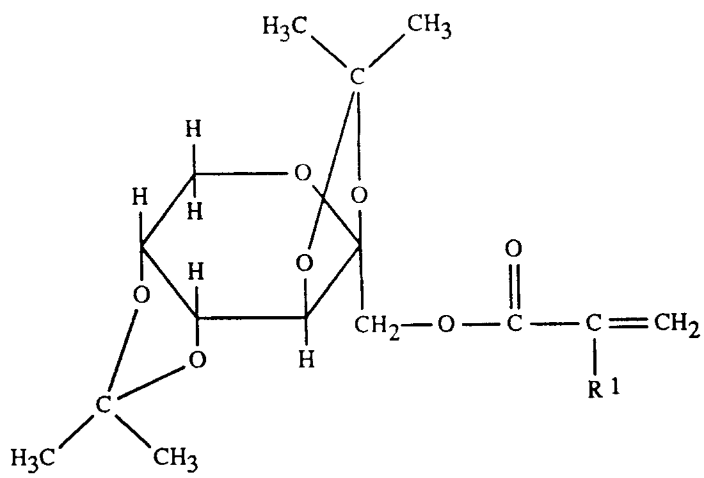

(IIb)

3-O-Methacryloyl-di-O-isopropyliden-β-D-fructopyranose (3-MDPFru) (Isomer von IIb mit $R^1$ = Methyl),

3-O-Acryloyl-di-O-isopropyliden-β-D-fructopyranose (3-ADPFru) (Isomer von IIb mit $R^1$ = H) sowie

1-O-Methacryloyl-2,3;4,6-di-O-isopropyliden-α-L-(-)-sorbofuranose (1-MDPSorb) der Formel IIc ($R^1$ = Methyl) und

1-O-Acryloyl-2,3;4,6-di-O-isopropyliden-α-L-(-)-sorbofuranose (1-ADPSorb) der Formel IIc ($R^1$ = H)

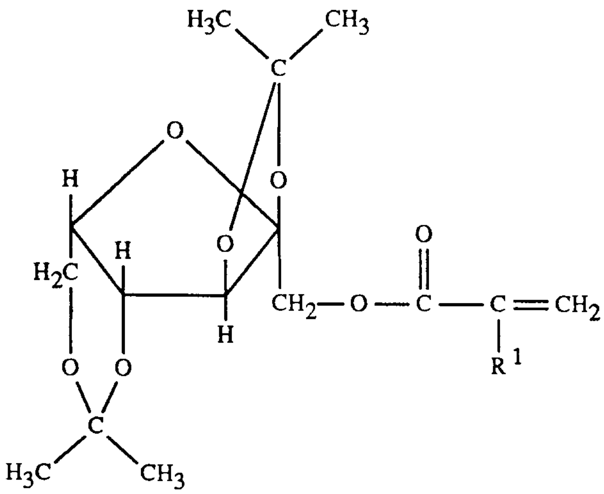

(IIc)

Besonders bevorzugte Vertreter der Vinylmonomere der Formel III sind
5-O-Methacryloyl-1,2;3,4-di-O-isopropyliden-DL-xylit (5-MDPXy) ($R^1$ = Methyl) und
5-O-Acryloyl-1,2;3,4-di-O-isopropyliden-DL-xylit (5-ADPXy) ($R^1$ = H) der Formel IIIa

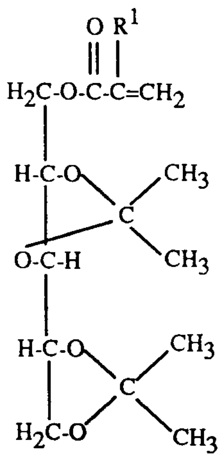

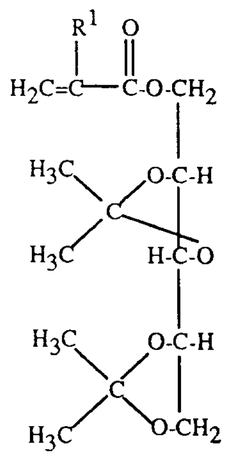

(IIIa)

Die erfindungsgemäss verwendbaren hydrophilen Vinylmonomere c) sind vorzugsweise Acrylate und Methacrylate der Formel:

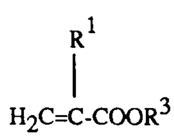,

worin $R^1$ für Wasserstoff oder Methyl steht und $R^3$ einen durch eine wasserlöslich machende Gruppe wie Carboxy, Hydroxy oder tert.-Amino, z.B. tert. Niederalkylamino mit 1 bis 7 Kohlenstoffatomen je Niederalkylgruppe, eine Polyethylenoxidgruppe mit 2-100 sich wiederholenden Einheiten, bevorzugt mit 2-40 sich wiederholenden Einheiten, oder eine Sulfat-, Phosphat-, Sulfonat- oder Phosphonatgruppe einfach oder mehrfach substituierten Kohlenwasserstoffrest mit 1 bis 10 Kohlenstoffatomen bedeutet, wie z.B. einen entsprechend substituierten Alkyl-, Cycloalkyl- oder Phenylrest oder eine Kombination solcher Reste, wie Phenylalkyl oder Alkylcycloalkyl, ferner Acrylamide und Methacrylamide der Formel

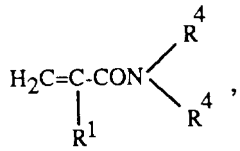

worin $R^4$ für Wasserstoff oder $C_1$-$C_4$-Alkyl steht;
Acrylamide und Methacrylamide der Formel

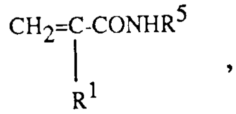

worin $R^5$ die Bedeutung von $R^3$ oder $R^4$ hat;
Maleinate und Fumarate der Formel

$R^3OOC\text{-}CH = CH\text{-}COOR^3$;

Crotonate der Formel

$CH_3\text{-}CH = CH\text{-}COOR^3$;

Vinylether der Formel

$H_2C = CH\text{-}OR^3$;

Vinyl-substituierte fünf- oder sechsgliedrige Heterocyclen mit ein oder zwei Stickstoffatomen sowie N-Vinyllactame, wie N-Vinyl-2-pyrrolidon, und vinylisch ungesättigte Carbonsäuren mit insgesamt 3 bis 10 Kohlenstoffatomen, wie Methacrylsäure, Crotonsäure, Fumarsäure oder Zimtsäure.

Bevorzugt sind z.B. durch Hydroxy substituierte $C_2$-$C_4$-Alkyl(meth)acrylate, fünf- bis siebengliedrige N-Vinyllactame, N,N-Di-$C_1$-$C_4$-alkyl(meth)acrylamide und vinylisch ungesättigte Carbonsäuren mit insgesamt 3 bis 5 Kohlenstoffatomen.

Der Anteil des Vinylmonomeren c) am Monomerengemisch beträgt bevorzugt 10-60 Mol-% und besonders bevorzugt 20-40 Mol-%. Auch von den Monomeren c) kann eines der vorstehend definierten Monomere verwendet werden oder eine Mischung von mehreren dieser Monomere.

Zu den verwendbaren wasserlöslichen Monomeren gehören: 2-Hydroxyethyl-, 2- und 3-Hydroxypropyl-, 2,3-Dihydroxypropyl-, Polyethoxyethyl- und Polyethoxypropylacrylate und -methacrylate sowie die entsprechenden Acrylamide und Methacrylamide, Acrylamid und Methacrylamid, N-Methylacrylamid und -methacrylamid, Bisaceton-acrylamid, 2-Hydroxyethylacrylamid, Dimethylacrylamid und -methacrylamid sowie Methylolacrylamid und -methacrylamid, N,N-Dimethyl- und N,N-Diethylaminoethylacrylat und -methacrylat sowie die entsprechenden Acrylamide und Methacrylamide, N-tert.-Butylaminoethylmethacrylat und -methacrylamid, 2- und 4-Vinylpyridin, 4- und 2-Methyl-5-vinylpyridin, N-Methyl-4-vinylpiperidin, 1-Vinyl- und 2-Methyl-1-vinyl-imidazol, Dimethylallylamin und Methyldiallylamin sowie para- und ortho-Aminostyrol, Dimethylaminoethylvinylether, N-Vinylpyrrolidon und 2-Pyrrolidinoethylmethacrylat, Acryl- und Methacrylsäure, Itaconsäure, Zimtsäure, Crotonsäure, Fumarsäure, Maleinsäure und deren Hydroxyniederalkylmono- und -diester, wie 2-Hydroxyethyl- und Di-(2-hydroxy)-ethylfumarat, -maleinat und -itaconat, sowie 3-Hydroxypropyl-butylfumarat und Di-polyalkoxyalkyl-fumarate, -maleinate und -itaconate, Maleinsäureanhydrid, Natriumacrylat und -methacrylat, 2-Methacryloyloxyethylsulfonsäure, 2-Acrylamido-2-methylpropansulfonsäure, 2-Phosphatoethylmethacrylat, Vinylsulfonsäure, Natriumvinylsulfonat, p-Styrolsulfonsäure, Natrium-p-styrolsulfonat und Allylsulfonsäure, N-Vinylpyrrolidon, N-Vinylcaprolactam, ferner die quaternisierten Derivate kationischer Monomerer, welche man durch Quaternisierung mit ausgewählten Alkylierungsmitteln, z.B. halogenierten Kohlenwasserstoffen wie Methyliodid, Benzylchlorid oder Hexadecylchlorid, Epoxiden wie Glycidol, Epichlorhydrin oder Ethylenoxyd, Acrylsäure, Dimethylsulfat, Methylsulfat und Propansulton erhält.

Eine vollständigere Liste im Zusammenhang mit dieser Erfindung verwendbarer, wasserlöslicher Monomerer findet sich in: R.H. Yocum und E.B. Nyquist, Functional Monomers [Funktionelle Monomere], Band 1, S. 424-440 (M. Dekker, N.Y. 1973).

Bevorzugte Monomere sind 2-Hydroxyethylmethacrylat, N-Vinyl-2-pyrrolidon, N,N-Dimethylacrylamid sowie Acryl- und Methacrylsäure.

Vernetzer d) sind insbesondere diolefinische Monomere, z.B. Allylacrylat und - methacrylat, Ethylenglykol-, Diethylenglykol-, Triethylenglykol-, Tetraethylenglykol-und allgemein Polyethylenoxidglykoldiacrylate und -dimethacrylate 1,4-Butandiol- und Polyn-butylenoxidglykoldiacrylate und -dimethacrylate, Propylenglykol- und Polypropylenoxidglykoldiacrylate und -dimethacrylate, Thiodiethylenglykoldiacrylat und -dimethacrylat, Di-(2-hydroxyethyl)-sulfondiacrylat und -dimethacrylat, Neopentylglykoldiacrylat und -dimethacrylat, Trimethylolpropan-tri- und -tetraacrylat, Pentaerythrit-tri- und -tetraacrylat, Divinylbenzol, Divinylether, Divinylsulfon, Disiloxanyl-bis-3-hydroxypropyldiacrylat oder-methacrylat und verwandte Verbindungen. Ethylenglykoldimethacrylat ist bevorzugt.

Der Vernetzer wird, soweit vorhanden, vorzugsweise in Mengen von 0,01-1 Mol-% zugesetzt, besonders bevorzugt in der Menge von 0,2 Mol-%, jeweils bezogen auf die Gesamtmenge der Monomere a) bis c).

Die erfindungsgemässen Hydrogele werden durch Radikalcopolymerisation, entweder in der Masse oder in Gegenwart geringer Mengen Lösungsmittel, erzeugt. Die Polymerisation wird zweckmässig in der Wärme durchgeführt, vorzugsweise in Gegenwart eines freie Radikale bildenden Initiators, beispielsweise bei einer Temperatur im Bereich von etwa 30 °C bis etwa 105 °C. Diese Initiatoren sind vorzugsweise Peroxide oder Azokatalysatoren mit einer Halbwertszeit von mindestens 20 Minuten bei der Polymerisationstemperatur. Typische Beispiele für verwendbare Peroxyverbindungen sind Isopropylpercarbonat, tert.-Butylperoctoat, Benzoylperoxid, Lauroylperoxid, Decanoylperoxid, Acetylperoxid, Bernsteinsäureperoxid, Methylethylketonperoxid, tert.-Butylperoxyacetat, Propionylperoxid, 2,4-Dichlorbenzoylperoxid, tert.-Butylperoxipivalat, Pelargonylperoxid, 2,5-Dimethyl-2,5-bis-(2-ethylhexanoylperoxy)-hexan, p-Chlorbenzoylperoxid, tert.-Butylperoxybutyrat, tert.-Butylperoxymaleinsäure, tert.-Butylperoxyisopropylcarbonat und Bis-(1-hydroxycyclohexyl)-peroxid.

Zu Azoverbindungen gehören 2,2-Azo-bis-isobutyronitril, 2,2'-Azo-bis-(2,4-dimethylvaleronitril), 1,1'-Azo-bis-(cyclohexancarbonitril) und 2,2'-Azo-bis-(2,4-dimethyl-4-methoxyvaleronitril).

Man kann dabei auch andere, freie Radikale bildende Mechanismen anwenden wie Strahlung mit z.B. Röntgenstrahlen, Elektronenstrahlen und UV-Strahlung.

Die Initiatormenge kann zwischen 0,002 und 1 Mol-%, bezogen auf die Bestandteile a) bis d), schwanken, liegt aber vorzugsweise bei 0,03 bis 0,3 Mol-%.

Die zu polymerisierenden Monomere werden zweckmässigerweise vor der Polymerisation gereinigt, insbesondere um Inhibitoren zu entfernen, mit denen sie stabilisiert sind. So werden sie beispielsweise mit geeigneten verdünnten wässrigen Basen, wie Alkalimetallhydroxiden, z.B. Natronlauge, gewaschen und unter schonendenTemperaturbedingungen destillativ gereinigt.

Die Polymerisationsgemische werden im Labormassstab auf an sich bekannte Weise, beispielsweise in Zylinderform, polymerisiert, indem man sie in Plastikspritzen einem Temperaturprogramm unterwirft, bei dem die Temperatur von 30 °C stufenweise bis etwa 100 °C erhöht wird. Die Temperaturstufen können z.B. zwischen 5 und 10 °C betragen, mit einer Verweildauer von 1 bis 5 Stunden pro Temperatur. Üblich sind zweistündige Intervalle, es können einzelne Temperaturen jedoch auch bis zu 20 Stunden gehalten werden. Üblicherweise wird am Ende 5 bis 20 Stunden bei Temperaturen um 100 °C getempert.

Um erfindungsgemässe Hydrogele zu erhalten, müssen die wie vorstehend beschrieben erhältlichen Copolymere hydratisiert werden. Dies geschieht zweckmässigerweise durch Lagern in wässriger gepufferter Kochsalzlösung, die vorzugsweise isotonisch ist. Die Polymerisate werden vor dem Hydratisieren normalerweise in dünne Scheiben geschnitten.

Die wie vorstehend beschriebenen Hydrogele enthalten in den durch die Vinylmonomere b) gebildeten Segmenten die dort vorhandenen Hydroxygruppen nach wie vor in geschützter Form, beispielsweise als Isopropyliderketale. Sie sind daher noch verhältnismässig stark hydrophob. Sie lassen sich in erfindungsgemässe Hydrogele überführen, die in den durch die Vinylmonomere b) gebildeten Segmenten die dort vorhandenen Hydroxygruppen in freier Form enthalten, indem die Schutzgruppen abgespalten werden. Dies kann durch Einbringen in ein saures Medium geschehen, wie dies für Acetalspaltungen allgemein bekannt ist, beispielsweise gemäss GB 2091750 (Tanaka et al.).

Durch die Schutzgruppenabspaltung werden die Segmente, die durch die Vinylmonomere b) gebildet werden, hydrophil bis hochhydrophil. Dadurch kann die Fähigkeit der Hydrogele, Wasser aufzunehmen, deutlich gesteigert werden. Auf diese Weise lässt sich die Sauerstoffdurchlässigkeit bei gleich bleibendem Gehalt an fluorhaltigen Monomeren und anderen Bestandteilen noch nach der Polymerisation beeinflussen. Die erfindungsgemässen Hydrogele weisen daher den Vorteil auf, dass sich die Sauerstoffdurchlässigkeit durch zwei voneinander unabhängige Massnahmen steuern lässt: den Gehalt an Vinylmonomeren a) einerseits, die Hydrolyse der Hydroxyschutzgruppen des Vinylmonomeren b) andererseits.

Ein weiterer überraschender Aspekt der Erfindung liegt darin, dass überhaupt die hydrophilen Monomere c) mit den hydrophoben Monomeren a) und den Saccharid-oder Zuckeralkoholmonomeren Polymerisate ergeben, die sowohl im ungequollenen als auch im gequollenen Zustand (Hydrogel) keine Phasentrennung besitzen und somit optisch klar sind. Das ist deswegen möglich, weil die Monomere a) mit den durch z.B. Isopropyliden-Schutzgruppen hydrophob gemachten Saccharid-Monomeren, die ohne entsprechende Schutzgruppen hochgradig hydrophil sind, eine klare Lösung bilden, die die hydrophilen Monomere c) aufnehmen können.

Die erfindungsgemässen Hydrogele weisen sehr gute Sauerstoffdurchlässigkeiten auf und sind dabei hydrophil und zusätzlich mechanisch stabil, d.h. sie haben z.B. eine hohe Reissfestigkeit. Sie sind daher ausgezeichnet geeignet als Materialien für Kontaktlinsen oder Intraokularlinsen sowie als sonstige biologisch verträgliche Materialien, wie z.B. Implantate, Augenbinden, transdermale Systeme oder andere Formen von Medikamententrägern.

Die Herstellung von Kontaktlinsen aus den genannten Hydrogelen kann auf an sich bekannte Weise erfolgen. Dazu werden die zu polymerisierenden Gemische z.B. in zylindrischer Form polymerisiert, und die erhältlichen Stäbe nach Entformung in Scheiben oder Knöpfe zerteilt, die weiter mechanisch bearbeitet werden können. Alternativ kann die Polymerisation auch in Linsenformen durchgeführt werden, so dass direkt Linsenrohlinge als Polymerisate erhalten werden.

Die Reaktion erfolgt vorzugsweise unter einer inerten Atmosphäre, wenn sie in offenen Formen durchgeführt wird. Bekanntlich hemmt Sauerstoff die Polymerisation und führt zu verlängerten Polymerisationszeiten. Werden geschlossene Formen zur Bildung des Polymerisats verwendet, so bestehen die Formen aus inerten Materialien mit niedriger Sauerstoffdurchlässigkeit und mit nicht-Klebenden Eigenschaften. Beispiele für geeignete Formmaterialien sind Polytetrafluorethylen, wie Teflon®, Silikonkautschuk, Polyethylen, Polypropylen und Polyester wie Mylar®. Bei Einsatz eines geeigneten Entformungsmittels sind auch Formen aus Glas und Metall verwendbar.

Die verwendeten Monomere sind bekannt, z.T. käuflich, oder sie können nach an sich bekannten Verfahren hergestellt werden.

Die nachfolgenden Beispiele erläutern den Gegenstand der Erfindung. Prozente bei Mengenangaben sind Molprozente soweit nicht ausdrücklich anders angegeben. Temperaturen werden in Grad Celsius angegeben.

Die verwendeten Abkürzungen haben folgende Bedeutungen:

| | |
|---|---|
| AIBN | Azoisobutyronitril |
| EGDM | Ethylenglykoldimethacrylat |
| $F_7$BuMA | Heptafluorpropyl-methyl-methacrylat |
| HEMA | 2-Hydroxyethylmethacrylat |
| VP | Vinylpyrrolidon |

Zu den Abkürzungen der verwendeten Monomere b) wird auf die Erläuterungen im Zusammenhang mit den Formeln II und III verwiesen.

Allgemeine Angaben:

$F_7$BuMA (Ventron GmbH) - mit Hydrochinon stabilisiert - VP (Fluka) - stabilisiert mit N,N'-Di-sec-butyl-p-phenylendiamin - und HEMA (Röhm GmbH) - stabilisiert mit Hydrochinon und Hydrochinonmonomethylether - werden von den Inhibitoren befreit, indem das betreffende Monomer (100 ml-Mengen) mit 3x100 ml 5%-iger Natronlauge und 1x100 ml Wasser gewaschen, über $Na_2SO_4$ getrocknet und danach inhibitorfrei bei Vermeidung von Überhitzungen durch das Heizbad destilliert wird. Der getrübte Vorlauf (ca. 10 ml) wird verworfen. Beim HEMA wird der im Ausgangsmonomer gaschromatographisch ermittelte EGDM-Anteil (im Mittel 0,14 Mol%) berücksichtigt. 1-MDPFru, 1-ADPFru und 1-MDPSorb stehen nicht in kristalliner Form sondern nur als Sirup zur Verfügung. Wegen ihrer hohen Viskosität bei Zimmertemperatur ist es nicht möglich, die Einwaagen so exakt wie notwendig zu erhalten; deshalb werden diese Monomere bei 50 °C eingewogen, wobei der Massefehler auf weniger als 1 mg gesenkt werden kann. Wegen ihrer zu befürchtenden Polymerisationsfähigkeit bei 50 °C werden die sirupösen, inhibitorfreien Monomere in Mengen von etwa 4 g in 10 ml-Kolben auf einer Heizplatte auf 50 °C erwärmt und direkt in ein 25 ml-Erlenmeyer-Kölbchen eingewogen.

Beispiel 1: In einen 25 ml-Erlenmeyer-Kolben werden 4,555 g HEMA, 4,683 g $F_7$BuMA, 1,749 g 5-MDPXy, 13,4 mg EGDM und, zuletzt, 5,5 mg AIBN eingewogen. Danach wird der Polymerisationsansatz 1 Stunde bei 20 °C gerührt, bis sich alle Kristalle in der Mischung restlos aufgelöst haben. Nachdem eine homogene flüssige Mischung erzeugt ist, wird diese in 10 ml-Plastikspritzen (Fa. Henke-Sass Wolf, Tuttlingen, Material:

Polyethylen und Polypropylen, Schmp. ca. 140 °C, Innendurchmesser: 16 mm) gefüllt. Die Luft wird hinausgepresst, die Spritzenansätze werden verschmolzen und die Stempel durch einen Draht gesichert. Die so verschlossenen Spritzen werden in ein Wasserbad gestellt, wobei darauf geachtet wird, dass die Wasseroberfläche stets ein höheres Niveau besitzt als die Oberfläche des Monomerengemisches in der Spritze. Nun wird jeweils 2 Stunden bei 30 °C, 40 °C, 50 °C, 60 °C und 70 °C polymerisiert. Danach werden die Spritzen mit ihrem festen Inhalt in einem Trockenschrank 2 Stunden bei 80 °C und dann 5 Stunden bei 90 °C nachpolymerisiert. Die erhaltenen Polymerisate werden aus den Spritzen herausgeholt und 8 Stunden bei 90 °C getempert. Es wird ein zylinderförmiges hartes Polymerisat erhalten. Die Polymerprobe ist glasklar und farblos.

Beispiel 2-13: Auf analoge Weise werden klare farblose Polymere mit den in Tabelle 1a angegebenen Zusammensetzungen erhalten.

Tabelle 1a

| Zusammensetzung der Polymerproben 1-13 | | | | | | | | | |
|---|---|---|---|---|---|---|---|---|---|
| Probe Nr. | $F_7$BuMa | | 5-MDPXy | | HEMA | | EGDM | | AIBN |
| | mol% | g | mol% | g | mol% | g | mol% | g | mg |
| 1 | 30 | 4.683 | 10 | 1.749 | 60 | 4.555 | 0.2 | 0.0134 | 5.5 |
| 2 | 30 | 4.296 | 20 | 3.208 | 50 | 3.483 | 0.2 | 0.0138 | 5.5 |
| 3 | 30 | 3.968 | 30 | 4.445 | 40 | 2.573 | 0.2 | 0.0141 | 5.5 |
| 4 | 30 | 3.687 | 40 | 5.506 | 30 | 1.793 | 0.2 | 0.0144 | 5.5 |
| 5 | 30 | 3.442 | 50 | 6.427 | 20 | 1.116 | 0.2 | 0.0146 | 5.5 |
| 6 | 30 | 3.229 | 60 | 7.233 | 10 | 0.524 | 0.2 | 0.0148 | 5.5 |
| 7 | 30 | 3.040 | 70 | 7.945 | 0 | | 0.2 | 0.0150 | 5.5 |
| | | | 5-ADPXy | | | | | | |
| | | | mol% | g | | | | | |
| 8 | 30 | 2.941 | 30 | 3.141 | 40 | 1.908 | 0.2 | 0.0104 | 4.0 |
| | | | 3-ADPGlu | | | | | | |
| | | | mol% | g | | | | | |
| 9 | 30 | 2.833 | 30 | 3.321 | 40 | 1.837 | 0.2 | 0.0101 | 4.0 |
| | | | 1-MDPFru | | | | | | |
| | | | mol% | g | | | | | |
| 10 | 30 | 2.781 | 30 | 3.406 | 40 | 1.804 | 0.2 | 0.0099 | 4.0 |
| | | | 1-ADPFru | | | | | | |
| | | | mol% | g | | | | | |
| 11 | 30 | 2.833 | 30 | 3.321 | 40 | 1.837 | 0.2 | 0.0101 | 4.0 |
| | | | 1-MDPSorb | | | | | | |
| | | | mol% | g | | | | | |
| 12 | 30 | 2.781 | 30 | 3.406 | 40 | 1.804 | 0.2 | 0.0099 | 4.0 |
| | | | 1-ADPSorb | | | | | | |
| | | | mol% | g | | | | | |
| 13 | 30 | 2.833 | 30 | 3.321 | 40 | 1.837 | 0.2 | 0.0101 | 4.0 |

Beispiele 14-36: Auf analoge Weise zu Beispiel 1 werden blasenfreie, klare, farblose Polymere mit den in Tabelle 1b angegebenen Zusammensetzungen erhalten, wobei, abweichend von Beispiel 1, das folgende Temperaturprogramm verwendet wird:

Polymerisation 15 Stunden bei 30 °C,jeweils 2 Stunden bei 40 °C, 50 °C, 60 °C, 12 Stunden bei 65 °C, 2

Stunden bei 70 °C, 2 Stunden bei 80 °C, 12 Stunden bei 85 °C, 8 Stunden bei 90 °C und 12 Stunden bei 98 °C. Nach der Herausnahme der entstandenen Polymerisate aus den Spritzen wird 12 Stunden bei 98 °C getempert.

Tabelle 1b: Zusammensetzung der Polymerproben 14-36

| Probe Nr. | $F_7$BuMa mol% | $F_7$BuMa g | Monosaccharid mol% | Monosaccharid g | HEMA/VP mol% | HEMA/VP g | EGDM mol% | EGDM g |
|---|---|---|---|---|---|---|---|---|
| | | | 5-MDPXy | | HEMA | | | |
| 14 | 10 | 1.1193 | 70 | 8.777 | 20 | 1.0894 | 0.2 | 0.01374 |
| 15 | 20 | 2.266 | 60 | 7.614 | 20 | 1.103 | 0.2 | 0.01391 |
| 16 | 40 | 4.648 | 40 | 5.207 | 20 | 1.136 | 0.2 | 0.01426 |
| 17 | 50 | 5.885 | 30 | 3.955 | 20 | 1.145 | 0.2 | 0.01444 |
| 18 | 60 | 7.154 | 20 | 2.671 | 20 | 1.160 | 0.2 | 0.01463 |
| 19 | 70 | 8.459 | 10 | 1.353 | 20 | 1.175 | 0.2 | 0.01483 |
| 20 | 80 | 9.793 | 0 | 0.00 | 20 | 1.191 | 0.2 | 0.01502 |
| | | | 1-MDPFru | | | | | |
| 21 | 10 | 1.042 | 70 | 8.931 | 20 | 1.0140 | 0.2 | 0.01245 |
| 22 | 20 | 2.128 | 60 | 7.818 | 20 | 1.039 | 0.2 | 0.01306 |
| 23 | 40 | 4.452 | 40 | 5.452 | 20 | 1.084 | 0.2 | 0.01365 |
| 24 | 50 | 5.695 | 30 | 4.184 | 20 | 1.108 | 0.2 | 0.01397 |
| 25 | 60 | 6.995 | 20 | 2.855 | 20 | 1.135 | 0.2 | 0.01431 |
| 26 | 70 | 8.3604 | 10 | 1.463 | 20 | 1.162 | 0.2 | 0.01466 |
| 27 | 80 | 9.793 | 0 | 0.00 | 20 | 1.191 | 0.2 | 0.01502 |
| | | | 3-MDPFru | | VP | | | |
| 28 | 20 | 2.1621 | 60 | 7.9309 | 20 | 0.896 | 0.2 | 0.013140 |
| 29 | 30 | 3.3134 | 50 | 6.758 | 20 | 0.916 | 0.2 | 0.01632 |
| 30 | 40 | 4.5164 | 40 | 5.5311 | 20 | 0.9360 | 0.2 | 0.01669 |
| 31 | 50 | 5.7784 | 30 | 4.2461 | 20 | 0.9671 | 0.2 | 0.01709 |
| 32 | 60 | 7.1029 | 20 | 2.8991 | 20 | 0.9813 | 0.2 | 0.017501 |
| 33 | 70 | 8.4911 | 10 | 1.4857 | 20 | 1.0056 | 0.2 | 0.017934 |
| | | | 3-ADPFru | | | | | |
| 34 | 40 | 4.6155 | 40 | 5.411 | 20 | 0.9583 | 0.2 | 0.017060 |
| 35 | 50 | 5.8785 | 30 | 4.1328 | 20 | 0.9742 | 0.2 | 0.017374 |
| 36 | 60 | 7.1829 | 20 | 2.807 | 20 | 0.9935 | 0.2 | 0.017700 |

Initiator pro Probe: 5,5 mg AIBN

Beispiel 37: Hydratisierung der Polymer-Scheiben

Die Polymerisate gemäss den Beispielen 1-36 werden in Scheiben (Durchmesser: 11,5 bis 12 mm, Dicke: 0,152 bis 0,271 mm) geschnitten und poliert. Es werden der Durchmesser $D_p$, die Dicke $d_p$ und das Gewicht $G_p$ der Scheiben bestimmt. $D_p$ wird mit einer Lupe mit Messeinteilung und $d_p$ mit einer Mikrometerschraube ermittelt. Die so erhaltenen Polymer-Scheiben werden in wässriger "gepufferter isotonischer Kochsalz-Lösung" (300 mosmol; pH 7,2; 3,04g $Na_2HPO_4$ x $2H_2O$, 0,84g $NaH_2PO_4$ x $H_2O$ und 8,00 g NaCl pro 1l Lösung) gelagert, die 2x erneuert wird. Alle Polymer-Scheiben sehen nach der Hydratisierung glasklar aus und sind hart.

Beispiel 38: Hydrolyse der Polymer-Scheiben

In Anlehnung an die Methode von Tanaka et al. (GB 2091750) werden die Polymer-Scheiben gemäss Beispiel 37 bei 20 °C 30 Minuten in eine 50%-ige wässrige Ameisensäure-Lösung und dann 2 Stunden in 6N Salzsäure bei 50 °C zur Abspaltung der Isopropyliden-Schutzgruppen gelagert. Nach der Hydrolyse

werden die Scheiben bei 20 °C 15 Minuten in 2%-ige wässrige Soda-Lösung gelegt und dann 10 Tage bei Zimmertemperatur in "gepufferter isotonischer Kochsalz-Lösung" (wie in Beispiel 37) aufbewahrt, wobei die Lösung 2x erneuert wird. Abgesehen von der Polymer-Scheibe Nr. 8 sind alle Scheiben farblos und glasklar. Mit Ausnahme der Polymerisate 1, 2, 9, 10 und 12, die hart sind, sind die übrigen Polymer-Scheiben weiche Materialien.

Die Abspaltung der Isopropyliden-Schutzgruppen und damit die Freisetzung der OH-Gruppen an den Saccharid-Molekülen durch 6N HCl bei 20 °C wurde eingehend studiert. Hierbei wurde auch die Frage geklärt, ob unter den angegebenen Bedingungen auch eine Spaltung der Esterbindung, über die die Saccharid-Einheit an das Polymergerüst gebunden ist, stattfindet.

Es ist bekannt [T. Tanaka, Spektrum der Wissenschaft 78 (März 1981)], dass Hydrogele, die Carboxyl-Gruppen enthalten, beim Übergang von wässriger Salzlösung in destilliertes Wasser einen höheren Wassergehalt besitzen und eine grössere lineare Ausdehnung zeigen. Dementsprechend sollten die Werte für Wassergehalt und lineare Ausdehnung ansteigen, wenn die Polymerscheiben aus "gepufferter isotonischer Kochsalzlösung" in destilliertes Wasser gebracht werden. Ausserdem sollten die IR-Spektren dieser Proben (salzfrei gewaschen und danach getrocknet) Absorptionen für Carboxyl- bzw. eventuell auch Carboxylat-Gruppen enthalten, sofern eine Esterspaltung während der Schutzgruppen-Abspaltung in erheblichem Masse (Empfindlichkeit der IR-Spektroskopie) stattgefunden hat.

Die Proben Nr. 8, 9, 11 und 13 zeigen ein derartiges Ansteigen der linearen Ausdehnung und die für Carboxyl-Gruppen typischen IR-Absorptionen im Bereich von 2500 bis 2700 $cm^{-1}$ und bei 1570 $cm^{-1}$, während die Bande bei 3000 $cm^{-1}$ durch die starke $CH_2$-Bande bei 2490 $cm^{-1}$ und sehr starke breite OH-Bande bei 3400 $cm^{-1}$ nicht mit Sicherheit auswertbar ist. Für die Polymerproben Nr. 1-7, 10 und 12 wurde weder ein Ansteigen der linearen Ausdehnung noch das Auftreten von IR-Banden, die für Carboxyl-oder Carboxylat-Gruppen charakteristisch sind, gefunden.

Hieraus ist der Schluss zu ziehen, dass bei Acrylestern mit Saccharid-Einheiten eine derartige Esterspaltung auftritt, während sie unter den hier angewendeten Hydrolysebedingungen bei Methacrylaten nicht beobachtet wird.

Beispiel 39: Wassergehalt und lineare Quellung der hydratisierten Polymer-Scheiben (unhydrolysiert)

Nicht hydrolysierte Polymer-Scheiben gemäss den vorstehenden Beispielen werden auf ihren Wassergehalt (H) bei 35 °C nach Quellung in "gepufferter isotonischer Kochsalz-Lösung" sowie auf ihre lineare Ausdehnung (LE) untersucht. Die ermittelten Werte sind in Tabelle 2 zusammengefasst. Bei den Polymerproben 1-7 liegen sowohl Wassergehalt als auch lineare Ausdehnung insgesamt sehr niedrig und umso niedriger, je grösser der Anteil von $F_7$BuMA und dem geschützten 5-MDPXy liegt, was auf den hydrophoben Charakter dieser beiden Monomere zurückzuführen ist. Gleiches gilt für die Polymerproben 8-13, bei denen der Wassergehalt durchwegs unter 2% liegt und die lineare Ausdehnung praktisch Null ist.

Tabelle 2

| Polymer gemäss Bsp. | H [%] bei 35 ° C | LE [%] bei 35 ° C |
|---|---|---|
| 1 | 7 | 3 |
| 2 | 4 | 1 |
| 3 | 3 | < 1 |
| 4 | 2 | < 1 |
| 5 | 1 | < 1 |
| 6 | < 1 | < 1 |
| 7 | < 1 | < 1 |
| 8-13 | < 2 | ~ 0 |
| 14 | 17,33 | |
| 15 | 2,19 | |
| 16 | 1,83 | |
| 17 | 1,45 | |
| 18 | 1,25 | |
| 19 | 0,83 | |
| 20 | 0,62 | |
| 21 | - | |
| 22 | 1,92 | |
| 23 | 1,49 | |
| 24 | 1,04 | |
| 25 | 0,98 | |
| 26 | 0,92 | |
| 27 | 0,61 | |
| 28 | 2,39 | |
| 29 | 1,50 | |
| 30 | 1,42 | |
| 31 | 1,40 | |
| 32 | 1,20 | |
| 33 | 1,58 | |
| 34 | 1,32 | |
| 35 | 1,23 | |
| 36 | 1,54 | |

Beispiel 40: Wassergehalt und lineare Ausdehnung der hydrolysierten und gequollenen Polymerproben

Die nachfolgende Tabelle 3 zeigt die Werte für den Wassergehalt und die lineare Ausdehnung für die hydrolysierten Polymerproben, bei denen die Isopropyliden-Schutzgruppen an den 5-MDPXy-Einheiten (oder analogen Einheiten) abgespalten ist. Polymerproben mit vergleichbaren Gehalten an VP anstelle von 5-MDPXy besitzen geringere Werte für den Wassergehalt und die lineare Ausdehnung. Die Werte für den Wassergehalt sind auch für die kommerziell erhältlichen Linsen W 38 und WCE angegeben.

Tabelle 3

| Polymer gemäss Bsp. | H [%] bei 35 °C | LE [%] bei 35 °C |
|---|---|---|
| 1 | 20 | 7 |
| 2 | 31 | 12 |
| 3 | 42 | 17,5 |
| 4 | 50 | 23,0 |
| 5 | 54 | 27,0 |
| 6 | 57 | 29,5 |
| 7 | 59 | 30,0 |
| 8 | 45 | 20,0 |
| 9 | 40 | |
| 10 | 25 | |
| 11 | 42 | 17,0 |
| 12 | 35 | |
| 13 | 45 | 19,0 |
| 14 | 79,2 | 62,6 |
| 15 | 66,4 | 40,7 |
| 16 | 40,4 | 16,9 |
| 17 | 24,3 | 5,1 |
| 18 | 14,3 | 2,7 |
| 19 | 4,4 | 1,7 |
| 20 | 1,6 | 0,0 |
| 21 | 89,0 | 48,7 |
| 22 | 66,9 | 28,7 |
| 23 | 27,6 | 0,9 |
| 24 | 15,0 | 0,9 |
| 25 | 12,4 | 0,0 |
| 26 | 6,5 | 0,0 |
| 27 | 1,6 | 0,0 |
| 28 | 67,5 | 21,4 |
| 29 | 52,5 | 12,2 |
| 30 | 30,9 | 4,2 |
| 31 | 10,0 | 1,3 |
| 32 | 5,1 | 0,8 |
| 33 | 6,2 | 0,8 |
| 34 | 48,0 | 12,2 |
| 35 | 27,8 | 5,5 |
| 36 | 10,4 | 5,0 |
| W38 | 38 | |
| WCE | 57 | |

Beispiel 41: Bestimmung der Sauerstoff-Durchlässigkeit

Die Messung wird mit einem Createch Permeometer, Modell 201 [1032 Neilson St., California 94 706) mit Ag-Anode und Pt-Kathode nach der Methode von J. Fatt (Am. J. Optom. and Physiol. Optics, 48, 545 (1971)] bei 35 °C durchgeführt. Die Elektroden sind in einer Plexiglas-Halterung positioniert. Die Luftfeuchte beträgt bei den Messungen mehr als 90%.

Die Werte für die Sauerstoffdurchlässigkeit der hydratisierten und hydrolysierten Polymer-Scheiben Nr. 1-13 sind in Tabelle 4a - ausgedrückt als Permeationskoeffizient

$$P_{O_2},$$

Transmissibilität

$$T_{O_2}$$

und als Sauerstofffluss

$$J_{O_2}\text{-}$$

angegeben. Für Vergleichszwecke sind die Werte für zwei im Handel befindliche Hydrogel-Materialien (W 38 = PolyHEMA mit EGDM vernetzt, WCE = Copolymer aus VP und Methylmethacrylat, beide Titmus Eurocon GmbH) hinzugefügt.

Tabelle 4b enthält die

$$P_{O_2}\text{-}, T_{O_2}\text{-} \text{ und } J_{O_2}\text{-}$$

Werte für die hydratisierten Polymerproben Nr. 14-20, 22, 23 und 29-36. Die Saccharid-Einheiten liegen bei diesen hydratisierten Polymerproben (mit Wassergehalten, die im allgemeinen weniger als 2% betragen, siehe Tab. 2) in der hydrophoben Form mit Isopropyliden-Schutzgruppen vor und tragen nur geringfügig zur Sauerstoffdurchlässigkeit bei.

Tabelle 4c enthält die Werte für die Sauerstoffdurchlässigkeit für die hydrolysierten Polymerproben Nr. 14-36 (Hydrogele).

## Tabelle 4a

| Polymer gemäss Beispiel Nr. (hydratisiert) | (hydrolysiert) | $P_{O_2}$ $10^{-11}$ $\left[\frac{ml\,(O_2)\cdot cm^2}{ml\cdot s\cdot mm\,(Hg)}\right]$ | $T_{O_2}$ $10^{-9}$ $\left[\frac{ml\,(O_2)}{cm^2\cdot s\cdot mm\,(Hg)}\right]$ | $J_{O_2}$ $\left[\frac{\mu l\,(O_2)}{cm^2\cdot h}\right]$ |
|---|---|---|---|---|
| 1 | | 4,2 | 1,1 | 0,6 |
| 4 | | 3,8 | 1,3 | 0,7 |
| 5 | | 3,4 | 1,2 | 0,7 |
| | 1 | 6,8 | 2,6 | 1,5 |
| | 2 | 11,9 | 5,5 | 3,1 |
| | 3 | 17,9 | 7,3 | 4,1 |
| | 4 | 22,8 | 8,4 | 4,7 |
| | 5 | 26,4 | 9,3 | 5,2 |
| | 6 | 28,5 | 11,9 | 6,6 |
| | 7 | 32,0 | 13,9 | 7,8 |
| | 8 | 20,9 | 8,1 | 4,5 |
| | 9 | 18,1 | 7,9 | 4,4 |
| | 10 | 9,3 | 4,4 | 2,5 |
| | 11 | 17,3 | 9,7 | 5,4 |
| | 12 | 16,1 | 6,7 | 3,7 |
| | 13 | 20,1 | 9,1 | 5,1 |
| W38 | | 8,3 | 4,4 | 2,5 |
| WCE | | 22,9 | 10,9 | 6,1 |

Tabelle 4b

| Probe Nr. | $P_{O_2}$ $10^{-11}$ $\left[\frac{ml(O_2) \cdot cm^2}{ml \cdot s \cdot mm(Hg)}\right]$ | $T_{O_2}$ $10^{-9}$ $\left[\frac{ml(O_2)}{cm^2 \cdot s \cdot mm(Hg)}\right]$ | $J_{O_2}$ $\left[\frac{\mu l(O_2)}{cm^2 \cdot h}\right]$ |
|---|---|---|---|
| 14 | 5,11 | 3,01 | 1,68 |
| 15 | 8,34 | 3,9 | 2,18 |
| 16 | 12,68 | 5,03 | 2,80 |
| 17 | 11,86 | 6,27 | 3,48 |
| 18 | 14,93 | 8,03 | 4,48 |
| 19 | 30,10 | 13,44 | 7,50 |
| 20 | 43,13 | 26,30 | 14,67 |
| 22 | 4,95 | 2,66 | 1,48 |
| 23 | 7,79 | 4,28 | 2,39 |
| 29 | 6,12 | 3,5 | 1,95 |
| 30 | 8,17 | 5,79 | 3,23 |
| 31 | 12,31 | 6,35 | 3,54 |
| 32 | 18,51 | 9,85 | 4,49 |
| 33 | 24,67 | 13,78 | 7,69 |
| 34 | 8,12 | 4,08 | 2,27 |
| 35 | 11,80 | 6,02 | 3,36 |
| 36 | 15,96 | 9,73 | 5,43 |

Tabelle 4c

| Probe Nr. | $P_{O_2}$ $10^{-11}$ $\left[\frac{ml(O_2) \cdot cm^2}{ml \cdot s \cdot mm(Hg)}\right]$ | $T_{O_2}$ $10^{-9}$ $\left[\frac{ml(O_2)}{cm^2 \cdot s \cdot mm(Hg)}\right]$ | $J_{O_2}$ $\left[\frac{\mu l(O_2)}{cm^2 \cdot h}\right]$ |
|---|---|---|---|
| 14 | 41,15 | 19,23 | 10,73 |
| 15 | 32,01 | 14,04 | 7,83 |
| 16 | 22,67 | 7,29 | 4,07 |
| 17 | 16,4 | 6,84 | 3,82 |
| 18 | 16,85 | 7,02 | 3,92 |
| 19 | 20,2 | 8,92 | 9,98 |
| 20 | 29,8 | 16,3 | 9,09 |
| 21 | 40 | 29,85 | 16,66 |
| 22 | 32,08 | 13,77 | 7,68 |
| 23 | 14,99 | 7,31 | 4,08 |
| 24c | (12,37) | (4,78) | (2,72) |
| 25c | (15,6) | (7,04) | (3,93) |
| 26c | (21,7) | (12,6) | (7,03) |
| 27 | 29,8 | 16,3 | 9,09 |
| 28 | 26,09 | 11,7 | 6,53 |
| 29 | 21,32 | 11,34 | 6,32 |
| 30 | 11,11 | 7,17 | 4,00 |
| 31 | 12,57 | 6,7 | 3,73 |
| 32 | 18,05 | 9,35 | 5,21 |
| 33 | 27,53 | 14,27 | 7,96 |
| 34 | 13,5 | 11,34 | 6,32 |
| 35 | 19,9 | 9,9 | 5,52 |
| 36 | 22 | 13,67 | 7,62 |

C-Proben: nur 2 Stunden hydrolysiert

Beispiel 42: Kugeldruckhärte

Von den Polymer-Scheiben gemäss einigen der vorstehenden Beispiele werden Probezylinder (Ø 130 mm, D = 4,0 mm) gedreht und poliert. Die Kugeldruckhärte K wird mit einer Apparatur der Fa. Zwick bei 23 °C bestimmt. Die Probezylinder der Polymer-Scheiben Nr. 2-7 zersplitterten während der Messung. Die K-Werte der untersuchten Polymer-Scheiben sind in Tabelle 5 zusammengestellt.

Tabelle 5

| Polymer gemäss Beispiel Nr. | K[N/mm²] | |
|---|---|---|
| | nach 30s | nach 60s |
| 1 | | 119 |
| 14* | - | - |
| 15* | 127,6 | 122,0 |
| 16* | 112,6 | 106,3 |
| 17 | 112,6 | 106,3 |
| 18 | 101,5 | 97,0 |
| 19 | 84,6 | 79,8 |
| 20 | 81,5 | 77,3 |
| 21 | 182,0 | 174,0 |
| 22 | 173,5 | 166,4 |
| 23 | 153,1 | 147,2 |
| 24 | 143,0 | 136,7 |
| 25 | 124,0 | 112,6 |
| 26 | 96,0 | 92,3 |
| 27 | 81,5 | 77,3 |
| 28* | - | 159,5 |
| 29* | - | 153,1 |
| 30* | - | 147,2 |
| 31** | 132,0 | 127,6 |
| 32 | 127,6 | 112,6 |
| 33 | 106,3 | 100,7 |
| 34 | 127,6 | 123,5 |
| 35 | 116,0 | 109,4 |
| 36 | 103,5 | 98,2 |

* Proben zerbrochen:
14 vor der Messung
15 und 16 nach der Messung
28 bis 30 nach 60s
** ein Sprung in der Mitte nach der Messung

## Patentansprüche

## Patentansprüche für folgende Vertragsstaaten : AT, BE, CH, DE, FR, GB, GR, IT, LI, LU, NL, SE

**1.** Hydrogel, welches ein Copolymer aus einem polymerisierbaren Monomerengemisch ist, das
a) 2-85 Mol-% eines hydrophoben Vinylmonomeren mit mindestens drei Fluoratomen,
b) 2-80 Mol-% eines hydrophoben Polyhydroxyvinylmonomeren, dessen Hydroxygruppen in geschützter Form vorliegen,
c) 2-70 Mol-% eines hydrophilen Vinylmonomeren und,
d) bezogen auf die Gesamtmenge der Monomere a)-c), 0-5 Mol-% eines Vernetzers enthält, in welchem Hydrogel die Hydroxygruppen der durch die Monomere b) gebildeten Segmente in geschützter oder in freier Form vorliegen.

**2.** Hydrogel gemäss Anspruch 1, dadurch gekennzeichnet, dass das Vinylmonomere a) ausgewählt ist unter den Verbindungen der Formel I,

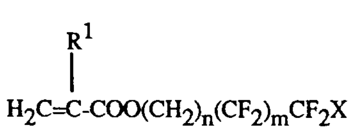

(I)

worin $R^1$ Wasserstoff oder Methyl bedeutet,
n für eine Zahl von 1 bis 4 steht,
m für eine Zahl von 0 bis 19 steht,
X Wasserstoff oder Fluor ist; mit der Massgabe, dass X für Fluor steht, wenn m 0 bedeutet; sowie unter Hexafluorisopropylacrylat, Hexafluorisopropylmethacrylat und 2,3,4,5,6-Pentafluorstyrol.

**3.** Hydrogel gemäss Anspruch 1, dadurch gekennzeichnet, dass das Polyhydroxyvinylmonomere b), dessen Hydroxygruppen in geschützter Form vorliegen, ein Vinylmonomer ist, das von einem Saccharid oder einem Zuckeralkohol abgeleitet ist und entweder die Formel II

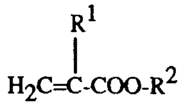

(II)

worin $R^1$ für Wasserstoff oder Methyl steht und $R^2$ einen Saccharidrest bedeutet, dessen Hydroxygruppen in geschützter Form vorliegen, oder die Formel III,

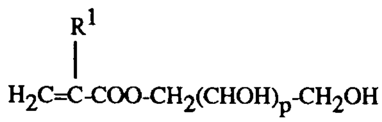

(III)

worin $R^1$ für Wasserstoff oder Methyl steht, p für eine Zahl von 1 bis 8 steht und worin die Hydroxygruppen in geschützter Form vorliegen, aufweist.

**4.** Hydrogel gemäss Anspruch 1, dadurch gekennzeichnet, dass das Vinylmonomer c) ausgewählt ist unter Acrylaten und Methacrylaten der Formel:

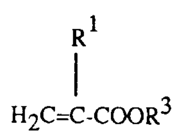

,

worin $R^1$ für Wasserstoff oder Methyl steht und $R^3$ einen durch eine wasserlöslich machende Gruppe wie Carboxy, Hydroxy oder tert.-Amino, eine Polyethylenoxidgruppe mit 2-100 sich wiederholenden Einheiten oder eine Sulfat-, Phosphat-, Sulfonat- oder Phosphonatgruppe einfach oder mehrfach substituierten Kohlenwasserstoffrest mit 1 bis 10 Kohlenstoffatomen bedeutet, ferner Acrylamiden und Methacrylamiden der Formel

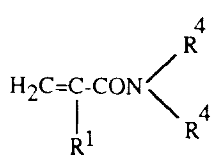

,

worin $R^4$ für Wasserstoff oder $C_1$-$C_4$-Alkyl steht;
Acrylamiden und Methacrylamiden der Formel

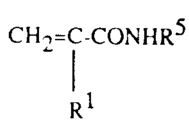

,

worin $R^5$ die Bedeutung von $R^3$ oder $R^4$ hat;

Maleinaten und Fumaraten der Formel

$R^3OOC\text{-}CH = CH\text{-}COOR^3$;

Crotonaten der Formel

$CH_3\text{-}CH = CH\text{-}COOR^3$;

Vinylethern der Formel

$H_2C = CH\text{-}OR^3$;

Vinyl-substituierten fünf- oder sechsgliedrigen Heterocyclen mit ein oder zwei Stickstoffatomen, speziell N-Vinyllactamen mit 4-6 Kohlenstoffatomen, und vinylisch ungesättigten Carbonsäuren mit insgesamt 3-10 Kohlenstoffatomen.

**5.** Hydrogel gemäss Anspruch 1, dadurch gekennzeichnet, dass das Vinylmonomere a) ausgewählt ist unter den Verbindungen der Formel I,

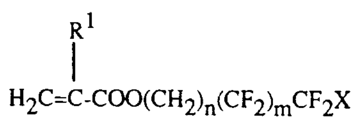

(I)

worin $R^1$ Wasserstoff oder Methyl bedeutet,
n für eine Zahl von 1 bis 4 steht,
m für eine Zahl von 0 bis 19 steht,
X Wasserstoff oder Fluor ist; mit der Massgabe, dass X für Fluor steht, wenn m 0 bedeutet; sowie unter Hexafluorisopropylacrylat, Hexafluorisopropylmethacrylat und 2,3,4,5,6-Pentafluorstyrol,
das Polyhydroxyvinylmonomere b), dessen Hydroxygruppen in geschützter Form vorliegen, ein Vinylmonomer ist, das von einem Saccharid oder einem Zuckeralkohol abgeleitet ist und entweder die Formel II

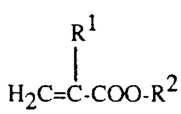

(II)

worin $R^1$ für Wasserstoff oder Methyl steht und $R^2$ einen Saccharidrest bedeutet, dessen Hvdroxygruppen in geschützter Form vorliegen, oder die Formel III,

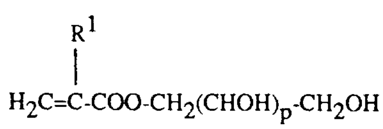

(III)

worin $R^1$ für Wasserstoff oder Methyl steht, p für eine Zahl von 1 bis 8 steht und worin die Hydroxygruppen in geschützter Form vorliegen, aufweist,
und das Vinylmonomer c) ausgewählt ist unter Acrylaten und Methacrylaten der Formel:

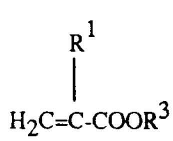

worin $R^1$ für Wasserstoff oder Methyl steht und $R^3$ einen durch eine wasserlöslich machende Gruppe wie Carboxy, Hydroxy oder tert.-Amino, eine Polyethylenoxidgruppe mit 2-100 sich wiederholenden Einheiten oder eine Sulfat-, Phosphat-, Sulfonat- oder Phosphonatgruppe einfach oder mehrfach substituierten Kohlenwasserstoffrest mit 1 bis 10 Kohlenstoffatomen bedeutet, ferner Acrylamiden und Methacrylamiden der Formel

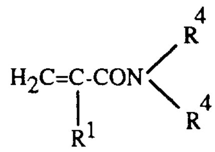 ,

worin $R^4$ für Wasserstoff oder $C_1$-$C_4$-Alkyl steht;
Acrylamiden und Methacrylamiden der Formel

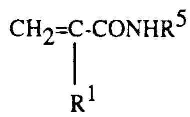 ,

worin $R^5$ die Bedeutung von $R^3$ oder $R^4$ hat;
Maleinaten und Fumaraten der Formel

$R^3OOC\text{-}CH=CH\text{-}COOR^3$;

Crotonaten der Formel

$CH_3\text{-}CH=CH\text{-}COOR^3$;

Vinylethern der Formel

$H_2C=CH\text{-}OR^3$

und N-Vinyllactamen.

**6.** Hydrogel gemäss Anspruch 1, worin die Hydroxygruppen der durch die Monomere b) gebildeten Segmente in geschützter oder teilweise in geschützter Form vorliegen.

**7.** Hydrogel gemäss Anspruch 1, worin die Hydroxygruppen der durch die Monomere b) gebildeten Segmente in freier Form vorliegen.

**8.** Hydrogel gemäss Anspruch 1, dadurch gekennzeichnet, dass das Monomerengemisch
10-80 Mol-% Vinylmonomere a),
10-70 Mol-% Vinylmonomere b) und
10-60 Mol-% Vinylmonomere c) enthält.

**9.** Hydrogel gemäss Anspruch 8, dadurch gekennzeichnet, dass das Monomerengemisch
20-60 Mol-% Vinylmonomere a),
20-60 Mol-% Vinylmonomere b) und
20-40 Mol-% Vinylmonomere c) enthält.

**10.** Hydrogel gemäss Anspruch 9, dadurch gekennzeichnet, dass das Monomerengemisch 30 Mol-% Vinylmonomere a) und/oder 30 Mol-% Vinylmonomere b) enthält.

**11.** Hydrogel gemäss einem der Ansprüche 2 oder 5 , dadurch gekennzeichnet, dass das Vinylmonomere a) die Formel I aufweist, worin $R^1$ für Methyl steht, n 1 oder 2 bedeutet, m für 1 bis 4 steht und X Fluor bedeutet.

**12.** Hydrogel gemäss Anspruch 11, dadurch gekennzeichnet, dass das Vinylmonomere a) 2,2,3,3,4,4,4-Heptafluorbutylmethacrylat ist.

**13.** Hydrogel gemäss einem der Ansprüche 3 oder 5, dadurch gekennzeichnet, dass das Vinylmonomere b) eine Verbindung der Formel II ist, worin $R^2$ ausgewählt ist unter den Resten der Monosaccharide Erythrose, Threose, Arabinose, Ribose, Xylose, Glucose, Mannose, Galactose, Fructose und Sorbose.

**14.** Hydrogel gemäss einem der Ansprüche 3 oder 5, dadurch gekennzeichnet, dass das Vinylmonomere b) eine Verbindung der Formel III ist, die von einem Zuckeralkohol ausgewählt unter Xylit, Adonit, Arabit, Sorbit, Mannit und Dulcit abgeleitet ist.

**15.** Hydrogel gemäss Anspruch 13 oder 14, dadurch gekennzeichnet, dass das Vinylmonomere b) ausgewählt ist unter
3-O-Acryloyl-1,2;5,6-di-Oisopropyliden-α-D-(-)-glucofuranose (3-ADPGlu),
1-O-Methacryloyl-2,3;4,5-di-O-isopropyliden-β-D-(-)-fructopyranose (1-MDPFru),
1-O-Acryloyl-2,3;4,5-di-O-isopropyliden-β-D-(-)-fructopyranose (1-ADPFru),
3-O-Methacryloyl-di-O-isopropyliden-β-D-fructopyranose (3-MDPFru),
3-O-Acryloyl-di-O-isopropyliden-β-D-fructopyranose (3-ADPFru),
1-O-Methacryloyl-2,3;4,6-di-O-isopropyliden-α-L-(-)-sorbofuranose (1-MDPSorb),
1-O-Acryloyl-2,3;4,6-di-O-isopropyliden-α-L-(-)sorbofuranose (1-ADPSorb),
5-O-Methacryloyl-1,2;3,4-di-O-isopropyliden-DL-xylit (5-MDPXy) und
5-O-Acryloyl-1,2;3,4-di-O-isopropyliden-DL-xylit (5-ADPXy).

**16.** Hydrogel gemäss einem der Ansprüche 1 oder 4 , dadurch gekennzeichnet, dass das Vinylmonomere c) ausgewählt ist unter durch Hydroxy substituierten $C_2$-$C_4$-Alkyl(meth)acrylaten, fünf- bis siebengliedrigen N-Vinyllactamen, N,N-Di-$C_1$-$C_4$-alkyl(meth)acrylamiden und vinylisch ungesättigten Carbonsäuren mit insgesamt 3 bis 5 Kohlenstoffatomen.

**17.** Hydrogel gemäss Anspruch 16, dadurch gekennzeichnet, dass das Vinylmonomere c) ausgewählt ist unter 2-Hydroxyethylmethacrylat, N-Vinyl-2-pyrrolidon, N,N-Dimethylacrylamid sowie Acryl- und Methacrylsäure.

**18.** Hydrogel gemäss Anspruch 1, dadurch gekennzeichnet, dass das Vinylmonomere a) 2,2,3,3,4,4,4-Heptafluorbutylmethacrylat ist, das Vinylmonomere b) ausgewählt ist unter 3-O-Acryloyl-1,2;5,6-di-O-isopropyliden-α-D-(-)-glucofuranose (3-ADPGlu),
1-O-Methacryloyl-2,3;4,5-di-O-isopropyliden-β-D-(-)-fructopyranose (1-MDPFru),
1-O-Acryloyl-2,3;4,5-di-O-isopropyliden-β-D-(-)-fructopyranose (1-ADPFru),
3-O-Methacryloyl-di-O-isopropyliden-β-D-fructopyranose (3-MDPFru),
3-O-Acryloyl-di-O-isopropyliden-β-D-fructopyranose (3-ADPFru),
1-O-Methacryloyl-2,3;4,6-di-O-isopropyliden-α-L-(-)-sorbofuranose (1-MDPSorb),
1-O-Acryloyl-2,3;4,6-di-O-isopropyliden-α-L-(-)-sorbofuranose (1-ADPSorb),
5-O-Methacryloyl-1,2;3,4-di-O-isopropyliden-DL-xylit (5-MDPXy) und
5-O-Acryloyl-1,2;3,4-di-O-isopropyliden-DL-xylit (5-ADPXy)
und das Vinylmonomere c) ausgewählt ist unter 2-Hydroxyethylmethacrylat und N-Vinyl-2-pyrrolidon.

**19.** Kontaktlinse bestehend im wesentlichen aus einem Hydrogel gemäss einem der Ansprüche 1 bis 18.

**20.** Intraokularlinse bestehend im wesentlichen aus einem Hydrogel gemäss einem der Ansprüche 1 bis 18.

**21.** Verwendung eines Hydrogels gemäss einem der Ansprüche 1 bis 18 zur Herstellung einer Kontaktlinse.

**22.** Verwendung eines Hydrogels gemäss einem der Ansprüche 1 bis 18 zur Herstellung einer Intraokularlinse.

**23.** Verfahren zur Herstellung eines Hydrogels gemäss einem der Ansprüche 1 bis 18 durch Radikalcopolymerisation.

**24.** Verfahren zur Herstellung eines Hydrogels gemäss Anspruch 7 durch Radikalcopolymerisation und saure Hydrolyse der Hydroxyschutzgruppen.

**25.** Verfahren zur Herstellung einer Kontaktlinse bestehend im wesentlichen aus einem Hydrogel gemäss einem der Ansprüche 1 bis 18 durch Radikalcopolymerisation und anschliessende mechanische Bearbeitung auf an sich bekannte Weise.

**Patentansprüche für folgenden Vertragsstaat : ES**

**1.** Verfahren zur Herstellung eines Hydrogels, welches ein Copolymer aus einem polymerisierbaren Monomerengemisch ist, das

a) 2-85 Mol-% eines hydrophoben Vinylmonomeren mit mindestens drei Fluoratomen,

b) 2-80 Mol-% eines hydrophohen Polyhydroxyvinylmonomeren, dessen Hydroxygruppen in geschützter Form vorliegen,

c) 2-70 Mol-% eines hydrophilen Vinylmonomeren und,

d) bezogen auf die Gesamtmenge der Monomere a)-c), 0-5 Mol-% eines Vernetzers enthält, in welchem Hydrogel die Hydroxygruppen der durch die Monomere b) gebildeten Segmente in geschützter oder in freier Form vorliegen, dadurch gekennzeichnet, dass man die entsprechenden Komponenten auf konventionelle Art vermischt und polymerisiert.

**2.** Verfahren zur Herstellung eines Hydrogels gemäss Anspruch 1, dadurch gekennzeichnet, dass das Vinylmonomere a) ausgewählt ist unter den Verbindungen der Formel I,

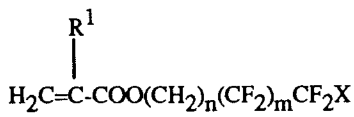

(I)

worin $R^1$ Wasserstoff oder Methyl bedeutet,
n für eine Zahl von 1 bis 4 steht,
m für eine Zähl von 0 bis 19 steht,
X Wasserstoff oder Fluor ist; mit der Massgabe, dass X für Fluor steht, wenn m 0 bedeutet; sowie unter Hexafluorisopropylacrylat, Hexafluorisopropylmethacrylat und 2,3,4,5,6-Pentafluorstyrol.

**3.** Verfahren zur Herstellung eines Hydrogels gemäss Anspruch 1, dadurch gekennzeichnet, dass das Polyhydroxyvinylmonomere b), dessen Hydroxygruppen in geschützter Form vorliegen, ein Vinylmonomer ist, das von einem Saccharid oder einem Zuckeralkohol abgeleitet ist und entweder die Formel II

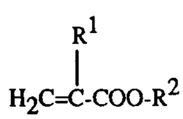

(II)

worin $R^1$ für Wasserstoff oder Methyl steht und $R^2$ einen Saccharidrest bedeutet, dessen Hydroxygruppen in geschützter Form vorliegen, oder die Formel III,

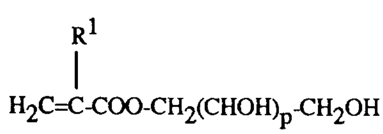

(III)

worin $R^1$ für Wasserstoff oder Methyl steht, p für eine Zahl von 1 bis 8 steht und worin die Hydroxygruppen in geschützter Form vorliegen, aufweist.

**4.** Verfahren zur Herstellung eines Hydrogels gemäss Anspruch 1, dadurch gekennzeichnet, dass das Vinylmonomer c) ausgewählt ist unter Acrylaten und Methacrylaten der Formel:

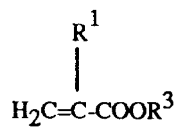 ,

worin $R^1$ für Wasserstoff oder Methyl steht und $R^3$ einen durch eine wasserlöslich machende Gruppe wie Carboxy, Hydroxy oder tert.-Amino, eine Polyethylenoxidgruppe mit 2-100 sich wiederholenden Einheiten oder eine Sulfat-, Phosphat-, Sulfonat- oder Phosphonatgruppe einfach oder mehrfach substituierten Kohlenwasserstoffrest mit 1 bis 10 Kohlenstoffatomen bedeutet, ferner Acrylamiden und Methacrylamiden der Formel

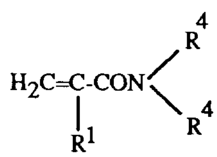 ,

worin $R^4$ für Wasserstoff oder $C_1$-$C_4$-Alkyl steht;
Acrylamiden und Methacrylamiden der Formel

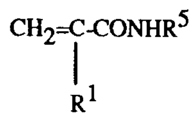 ,

worin $R^5$ die Bedeutung von $R^3$ oder $R^4$ hat;
Maleinaten und Fumaraten der Formel

$R^3OOC\text{-}CH = CH\text{-}COOR^3$;

Crotonaten der Formel

$CH_3\text{-}CH = CH\text{-}COOR^3$;

Vinylethern der Formel

$H_2C = CH\text{-}OR^3$;

Vinyl-substituierten fünf oder sechsgliedrigen Heterocyclen mit ein oder zwei Stickstoffatomen, speziell N-Vinyllactamen mit 4-6 Kohlenstoffatomen, und vinylisch ungesättigten Carbonsäuren mit insgesamt 3-10 Kohlenstoffatomen.

**5.** Verfahren zur Herstellung eines Hydrogels gemäss Anspruch 1, dadurch gekennzeichnet, dass das Vinylmonomere a) ausgewählt ist unter den Verbindungen der Formel I,

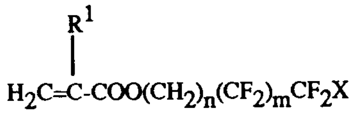 (I)

worin $R^1$ Wasserstoff oder Methyl bedeutet,
n für eine Zahl von 1 bis 4 steht,
m für eine Zahl von 0 bis 19 steht,

X Wasserstoff oder Fluor ist; mit der Massgabe, dass X für Fluor steht, wenn m 0 bedeutet; sowie unter Hexafluorisopropylacrylat, Hexafluorisopropylmethacrylat und 2,3,4,5,6-Pentafluorstyrol,
das Polyhydroxyvinylmonomere b), dessen Hydroxygruppen in geschützter Form vorliegen, ein Vinylmonomer ist, das von einem Saccharid oder einem Zuckeralkohol abgeleitet ist und entweder die Formel II

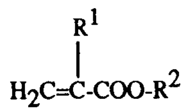

(II)

worin $R^1$ für Wasserstoff oder Methyl steht und $R^2$ einen Saccharidrest bedeutet, dessen Hydroxygruppen in geschützter Form vorliegen, oder die Formel III,

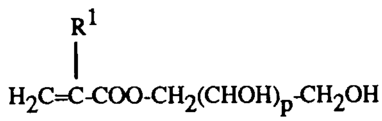

(III)

worin $R^1$ für Wasserstoff oder Methyl steht, p für eine Zahl von 1 bis 8 steht und worin die Hydroxygruppen in geschützter Form vorliegen, aufweist,
und das Vinylmonomer c) ausgewählt ist unter Acrylaten und Methacrylaten der Formel:

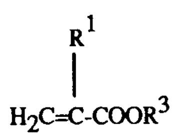

,

worin $R^1$ für Wasserstoff oder Methyl steht und $R^3$ einen durch eine wasserlöslich machende Gruppe wie Carboxy, Hydroxy oder tert.-Amino, eine Polyethylenoxidgruppe mit 2-100 sich wiederholenden Einheiten oder eine Sulfat-, Phosphat-, Sulfonat- oder Phosphonatgruppe einfach oder mehrfach substituierten Kohlenwasserstoffrest mit 1 bis 10 Kohlenstoffatomen bedeutet, ferner Acrylamiden und Methacrylamiden der Formel

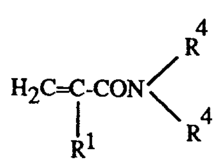

,

worin $R^4$ für Wasserstoff oder $C_1$-$C_4$-Alkyl steht;
Acrylamiden und Methacrylamiden der Formel

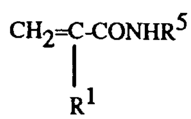

,

worin $R^5$ die Bedeutung von $R^3$ oder $R^4$ hat;
Maleinaten und Fumaraten der Formel

$R^3OOC\text{-}CH = CH\text{-}COOR^3$;

Crotonaten der Formel

$CH_3$-CH = CH-COOR$^3$;

Vinylethern der Formel

$H_2C$ = CH-OR$^3$

und N-Vinyllactamen.

6. Verfahren zur Herstellung eines Hydrogels gemäss Anspruch 1, worin die Hydroxygruppen der durch die Monomere b) gebildeten Segmente in geschützter oder teilweise in geschützter Form vorliegen.

7. Verfahren zur Herstellung eines Hydrogels gemäss Anspruch 1, worin die Hydroxygruppen der durch die Monomere b) gebildeten Segmente in freier Form vorliegen.

8. Verfahren zur Herstellung eines Hydrogels gemäss Anspruch 1, dadurch gekennzeichnet, dass das Monomerengemisch
10-80 Mol-% Vinylmonomere a),
10-70 Mol-% Vinylmonomere b) und
10-60 Mol-% Vinylmonomere c) enthält.

9. Verfahren zur Herstellung eines Hydrogels gemäss Anspruch 8, dadurch gekennzeichnet, dass das Monomerengemisch
20-60 Mol-% Vinylmonomere a),
20-60 Mol-% Vinylmonomere b) und
20-40 Mol-% Vinylmonomere c) enthält.

10. Verfahren zur Herstellung eines Hydrogels gemäss Anspruch 9, dadurch gekennzeichnet, dass das Monomerengemisch 30 Mol-% Vinylmonomere a) und/oder 30 Mol-% Vinylmonomere b) enthält.

11. Verfahren zur Herstellung eines Hydrogels gemäss einem der Ansprüche 2 oder 5, dadurch gekennzeichnet, dass das Vinylmonomere a) die Formel I aufweist, worin $R^1$ für Methyl steht, n 1 oder 2 bedeutet, m für 1 bis 4 steht und X Fluor bedeutet.

12. Verfahren zur Herstellung eines Hydrogels gemäss Anspruch 11, dadurch gekennzeichnet, dass das Vinylmonomere a) 2,2,3,3,4,4,4-Heptafluorbutylmethacrylat ist.

13. Verfahren zur Herstellung eines Hydrogels gemäss einem der Ansprüche 3 oder 5, dadurch gekennzeichnet, dass das Vinylmonomere b) eine Verbindung der Formel II ist, worin $R^2$ ausgewählt ist unter den Resten der Monosaccharide Erythrose, Threose, Arabinose, Ribose, Xylose, Glucose, Mannose, Galactose, Fructose und Sorbose.

14. Verfahren zur Herstellung eines Hydrogels gemäss einem der Ansprüche 3 oder 5, dadurch gekennzeichnet, dass das Vinylmonomere b) eine Verbindung der Formel III ist, die von einem Zuckeralkohol ausgewählt unter Xylit, Adonit, Arabit, Sorbit, Mannit und Dulcit abgeleitet ist.

15. Verfahren zur Herstellung eines Hydrogels gemäss Anspruch 13 oder 14, dadurch gekennzeichnet, dass das Vinylmonomere b) ausgewählt ist unter
3-O-Acryloyl-1,2;5,6-di-O-isopropyliden-α-D-(-)-glucofuranose (3-ADPGlu),
1-O-Methacryloyl-2,3;4,5-di-O-isopropyliden-β-D-(-)-fructopyranose (1-MDPFru),
1-O-Acryloyl-2,3;4,5-di-O-isopropyliden-β-D-(-)-fructopyranose (1-ADPFru),
3-O-Methacryloyl-di-O-isopropyliden-β-D-fructopyranose (3-MDPFru),
3-O-Acryloyl-di-O-isopropyliden-β-D-fructopyranose (3-ADPFru),
1-O-Methacryloyl-2,3;4,6-di-O-isopropyliden-α-L-(-)-sorbofuranose (1-MDPSorb),
1-O-Acryloyl-2,3;4,6-di-O-isopropyliden-α-L-(-)-sorbofuranose (1-ADPSorb),
5-O-Methacryloyl-1,2;3,4-di-O-isopropyliden-DL-xylit (5-MDPXy) und
5-O-Acryloyl-1,2;3,4-di-O-isopropyliden-DL-xylit (5-ADPXy).

**16.** Verfahren zur Herstellung eines Hydrogels gemäss einem der Ansprüche 1 oder 4, dadurch gekennzeichnet, dass das Vinylmonomere c) ausgewählt ist unter durch Hydroxy substituierten $C_2$-$C_4$-Alkyl-(meth)acrylaten, fünf- bis siebengliedrigen N-Vinyllactamen, N,N-Di-$C_1$-$C_4$-alkyl(meth)acrylamiden und vinylisch ungesättigten Carbonsäuren mit insgesamt 3 bis 5 Kohlenstoffatomen.

**17.** Verfahren zur Herstellung eines Hydrogels gemäss Anspruch 16, dadurch gekennzeichnet, dass das Vinylmonomere c) ausgewählt ist unter 2-Hydroxyethylmethacrylat, N-Vinyl-2-pyrrolidon, N,N-Dimethylacrylamid sowie Acryl- und Methacrylsäure.

**18.** Verfahren zur Herstellung eines Hydrogels gemäss Anspruch 1, dadurch gekennzeichnet, dass das Vinylmonomere a) 2,2,3,3,4,4,4-Heptafluorbutylmethacrylat ist, das Vinylmonomere b) ausgewählt ist unter 3-O-Acryloyl-1,2;5,6-di-O-isopropyliden-α-D-(-)-glucofuranose (3-ADPGlu),
1-O-Methacryloyl-2,3;4,5-di-O-isopropyliden-β-D-(-)-fructopyr anose (1-MDPFru),
1-O-Acryloyl-2,3;4,5-di-O-isopropyliden-β-D-(-)-fructopyranose (1-ADPFru),
3-O-Methacryloyl-di-O-isopropyliden-β-D-fructopyranose (3-MDPFru),
3-O-Acryloyl-di-O-isopropyliden-β-D-fructopyranose (3-ADPFru),
1-O-Methacryloyl-2,3;4,6-di-O-isopropyliden-α-L-(-)-sorbofuranose (1-MDPSorb),
1-O-Acryloyl-2,3;4,6-di-O-isopropyliden-α-L-(-)-sorbofuranose (1-ADPSorb),
5-O-Methacryloyl-1,2;3,4-di-O-isopropyliden-DL-xylit (5-MDPXy) und
5-O-Acryloyl-1,2;3,4-di-O-isopropyliden-DL-xylit (5-ADPXy)
und das Vinylmonomere c) ausgewählt ist unter 2-Hydroxyethylmethacrylat und N-Vinyl-2-pyrrolidon.

**19.** Kontaktlinse bestehend im wesentlichen aus einem Hydrogel gemäss einem der Ansprüche 1 bis 18.

**20.** Intraokularlinse bestehend im wesentlichen aus einem Hydrogel gemäss einem der Ansprüche 1 bis 18.

**21.** Verwendung eines Hydrogels gemäss einem der Ansprüche 1 bis 18 zur Herstellung einer Kontaktlinse.

**22.** Verwendung eines Hydrogels gemäss einem der Ansprüche 1 bis 18 zur Herstellung einer Intraokularlinse.

**23.** Verfahren zur Herstellung eines Hydrogels gemäss einem der Ansprüche 1 bis 18 durch Radikalcopolymerisation.

**24.** Verfahren zur Herstellung eines Hydrogels gemäss Anspruch 7 durch Radikalcopolymerisation und saure Hydrolyse der Hydroxyschutzgruppen.

**25.** Verfahren zur Herstellung einer Kontaktlinse bestehend im wesentlichen aus einem Hydrogel gemäss einem der Ansprüche 1 bis 18 durch Radikalcopolymerisation und anschliessende mechanische Bearbeitung auf an sich bekannte Weise.

**Claims**

**Claims for the following Contracting States : AT, BE, CH, DE, FR, GB, GR, IT, LI, LU, NL, SE**

**1.** A hydrogel which is a copolymer of a polymerizable monomer mixture which contains
a) 2-85 mol-% of a hydrophobic vinyl monomer with at least three fluorine atoms,
b) 2-80 mol-% of a hydrophobic polyhydroxy vinyl monomer whose hydroxyl groups are in protected form,
c) 2-70 mol-% of a hydrophilic vinyl monomer and,
d) based on the total amount of monomers a)-c), 0-5 mol-% of a crosslinker, in which hydrogel the hydroxyl groups of the segments formed by the monomers b) are in protected or in free form.

**2.** A hydrogel according to claim 1, wherein the vinyl monomer a) is selected from the compounds of the formula I

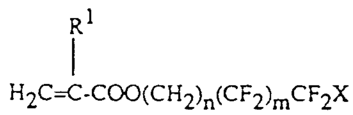

(I)

in which $R^1$ is hydrogen or methyl, n is a number from 1 to 4, m is a number from 0 to 19, X is hydrogen or fluorine; with the proviso that X is fluorine when m is 0; as well as from hexafluoroisopropyl acrylate, hexafluoroisopropyl methacrylate and 2,3,4,5,6-pentafluorostyrene.

**3.** A hydrogel according to claim 1, wherein the polyhydroxy vinyl monomer b) whose hydroxyl groups are in protected form is a vinyl monomer which is derived from a saccharide or a sugar alcohol, and has either formula II

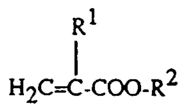

(II)

in which $R^1$ is hydrogen or methyl, and $R^2$ is a saccharide residue whose hydroxyl groups are in protected form, or formula III

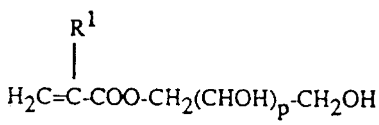

(III)

in which $R^1$ is hydrogen or methyl, p is a number from 1 to 8, and in which the hydroxyl groups are in protected form.

**4.** A hydrogel according to claim 1, wherein the vinyl monomer c) is selected from among acrylates and methacrylates of the formula:

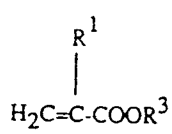
,

in which $R^1$ is hydrogen or methyl, and $R^3$ is a hydrocarbon radical which has 1 to 10 carbon atoms and is substituted one or more times by a group which confers solubility in water, such as carboxyl, hydroxyl or tert-amino, a polyethylene oxide group with 2-100 repeating units, or by a sulfate, phosphate, sulfonate or phosphonate group, as well as from acrylamides and methacrylamides of the formula

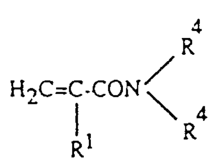
,

in which $R^4$ is hydrogen or $C_1$-$C_4$alkyl; acrylamides and methacrylamides of the formula

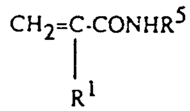

in which $R^5$ has the meaning of $R^3$ or $R^4$; maleates and fumarates of the formula

$R^3OOC\text{-}CH = CH\text{-}COOR^3$;

crotonates of the formula

$CH_3\text{-}CH = CH\text{-}COOR^3$;

vinyl ethers of the formula

$H_2C = CH\text{-}OR^3$;

vinyl-substituted five- or six-membered heterocycles with one or two nitrogen atoms, especially N-vinyllactams with 4-6 carbon atoms, and carboxylic acids with vinyl unsaturation and a total of 3-10 carbon atoms.

**5.** A hydrogel according to claim 1, wherein the vinyl monomer a) is selected from the compounds of the formula I

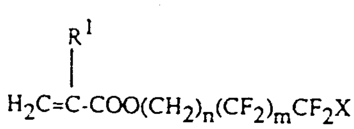

(I)

in which $R^1$ is hydrogen or methyl, n is a number from 1 to 4, m is a number from 0 to 19, X is hydrogen or fluorine; with the proviso that X is fluorine when m is 0; as well as from hexafluoroisopropyl acrylate, hexafluoroisopropyl methacrylate and 2,3,4,5,6-penta-fluorostyrene, the polyhydroxy vinyl monomer b) whose hydroxyl groups are in protected form is a vinyl monomer which is derived from a saccharide or a sugar alcohol, and has either formula II

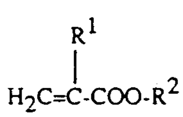

(II)

in which $R^1$ is hydrogen or methyl, and $R^2$ is a saccharide residue whose hydroxyl groups are in protected form, or formula III

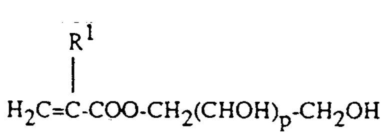

(III)

in which $R^1$ is hydrogen or methyl, p is a number from 1 to 8, and in which the hydroxyl groups are in protected form
and the vinyl monomer c) is selected from acrylates and methacrylates of the formula:

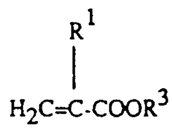
,

in which $R^1$ is hydrogen or methyl, and $R^3$ is a hydrocarbon radical which has 1 to 10 carbon atoms and is substituted one or more times by a group which confers solubility in water, such as carboxyl, hydroxyl or tert-amino, a polyethylene oxide group with 2-100 repeating units, or by a sulfate, phosphate, sulfonate or phosphonate group, as well as from acrylamides and methacrylamides of the formula

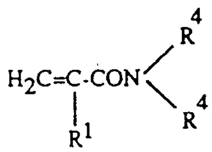
,

in which $R^4$ is hydrogen or $C_1$-$C_4$alkyl; acrylamides and methacrylamides of the formula

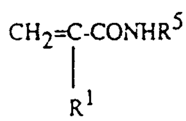
,

in which $R^5$ has the meaning of $R^3$ or $R^4$; maleates and fumarates of the formula

$R^3OOC\text{-}CH=CH\text{-}COOR^3$;

crotonates of the formula

$CH_3\text{-}CH=CH\text{-}COOR^3$;

vinyl ethers of the formula

$H_2C=CH\text{-}OR^3$

and N-vinyllactams.

**6.** A hydrogel according to claim 1, in which the hydroxyl groups of the segments formed by the monomers b) are in protected form or partially in protected form.

**7.** A hydrogel according to claim 1, in which the hydroxyl groups of the segments formed by the monomers b) are in free form.

**8.** A hydrogel according to claim 1, wherein the monomer mixture contains
10-80 mol-% vinyl monomers a),
10-70 mol-% vinyl monomers b) and
10-60 mol-% vinyl monomers c).

**9.** A hydrogel according to claim 8, wherein the monomer mixture contains
20-60 mol-% vinyl monomers a),
20-60 mol-% vinyl monomers b) and
20-40 mol-% vinyl monomers c).

**10.** A hydrogel according to claim 9, wherein the monomer mixture contains 30 mol-% vinyl monomers a) and/or 30 mol-% vinyl monomers b).

**11.** A hydrogel according to either of claims 2 or 5, wherein the vinyl monomer a) has the formula I in which $R^1$ is methyl, n is 1 or 2, m is 1 to 4, and X is fluorine.

**12.** A hydrogel according to claim 11, wherein the vinyl monomer a) is 2,2,3,3,4,4,4-heptafluorobutyl methacrylate.

**13.** A hydrogel according to either of claims 3 or 5, wherein the vinyl monomer b) is a compound of the formula II in which $R^2$ is selected from the residues of the monosaccharides erythrose, threose, arabinose, ribose, xylose, glucose, mannose, galactose, fructose and sorbose.

**14.** A hydrogel according to either of claims 3 or 5, wherein the vinyl monomer b) is a compound of the formula III which is derived from a sugar alcohol selected from xylitol, adonitol, arabitol, sorbitol, mannitol and dulcitol.

**15.** A hydrogel according to either of claims 13 or 14, wherein the vinyl monomer b) is selected from:
3-O-acryloyl-1,2;5,6-di-O-isopropylidene-α-D-(-)-glucofuranose (3-ADPGlu),
1-O-methacryloyl-2,3;4,5-di-O-isopropylidene-β-D-(-)-fructopyranose (1-MDPFru),
1-O-acryloyl-2,3;4,5-di-O-isopropylidene-β-D-(-)-fructopyranose (1-ADPFru),
3-O-methacryloyl-di-isopropylidene-β-D-fructopyranose (3-MDPFru),
3-O-acryloyl-di-O-isopropylidene-β-D-fructopyranose (3-ADPFru),
1-O-methacryloyl-2,3;4,6-di-O-isopropylidene-α-L-(-)-sorbofuranose (1-MDPSorb),
1-O-acryloyl-2,3;4,6-di-O-isopropylidene-α-L-(-)-sorbofuranose (1-ADPSorb),
5-O-methacryloyl-1,2;3,4-di-O-isopropylidene-DL-xylitol (5-MDPXy) and
5-O-acryloyl-1,2;3,4-di-O-isopropylidene-DL-xylitol (5-ADPXy).

**16.** A hydrogel according to either of claims 1 to 4, wherein the vinyl monomer c) is selected from hydroxyl-substituted $C_2$-$C_4$ alkyl (meth)acrylates, five- to seven-membered N-vinyllactams, N,N-di-$C_1$-$C_4$ alkyl (meth)acrylamides and carboxylic acids with vinyl unsaturation and a total of 3 to 5 carbons atoms.

**17.** A hydrogel according to claim 16, wherein the vinyl monomer c) is selected from 2-hydroxyethyl methacrylate, N-vinyl-2-pyrrolidone, N,N-dimethylacrylamide as well as acrylic and methacrylic acid.

**18.** A hydrogel according to claim 1, wherein the vinyl monomer a) is 2,2,3,3,4,4,4-heptafluorobutyl methacrylate, the vinyl monomer b) is selected from
3-O-acryloyl-1,2;5,6-di-O-isopropylidene-α-D-(-)-glucofuranose (3-ADPGlu),
1-O-methacryloyl-2,3;4,5-di-O-isopropylidene-β-D-(-)-fructopyranose (1-MDPFru),
1-O-acryloyl-2,3;4,5-di-O-isopropylidene-β-D-(-)-fructopyranose (1-ADPFru),
3-O-methacryloyl-di-O-isopropylidene-β-D-fructopyranose (3-MDPFru),
3-O-acryloyl-di-O-isopropylidene-β-D-fructopyranose (3-ADPFru),
1-O-methacryloyl-2,3;4,6-di-O-isopropylidene-α-L-(-)-sorbofuranose (1-MDPSorb),
1-O-acryloyl-2,3;4,6-di-O-isopropylidene-α-L-(-)-sorbofuranose (1-ADPSorb),
5-O-methacryloyl-1,2;3,4-di-O-isopropylidene-DL-xylitol (5-MDPXy) and 5-O-acryloyl-1,2;3,4-di-O-isopropylidene-DL-xylitol (5-ADPXy)
and the vinyl monomer c) is selected from 2-hydroxyethyl methacrylate and N-vinyl-2-pyrrolidone.

**19.** A contact lens essentially consisting of a hydrogel according to one of claims 1 to 18.

**20.** An intraocular lens essentially consisting of a hydrogel according to one of claims 1 to 18.

**21.** The use of a hydrogel according to one of claims 1 to 18 for the production of a contact lens.

**22.** The use of a hydrogel according to one of claims 1 to 18 for the production of an intraocular lens.

23. A process for the preparation of a hydrogel according to one of claims 1 to 18 by radical copolymerization.

24. A process for the preparation of a hydrogel as defined in claim 7 by radical copolymerization and acid hydrolysis of the hydroxyl protective groups.

25. A process for the production of a contact lens essentially consisting of a hydrogel according to one of claims 1 to 18 by radical copolymerization and subsequent mechanical processing in a manner known per se.

**Claims for the following Contracting State : ES**

1. A process for the preparation of a hydrogel which is a copolymer of a polymerizable monomer mixture which contains
   a) 2-85 mol-% of a hydrophobic vinyl monomer with at least three fluorine atoms,
   b) 2-80 mol-% of a hydrophobic polyhydroxy vinyl monomer whose hydroxyl groups are in protected form,
   c) 2-70 mol-% of a hydrophilic vinyl monomer and,
   d) based on the total amount of monomers a)-c), 0-5 mol-% of a crosslinker, in which hydrogel the hydroxyl groups of the segments formed by the monomers b) are in protected or in free form, which process comprises mixing and polymerizing the corresponding components in a conventional manner.

2. A process for the preparation of a hydrogel according to claim 1, wherein the vinyl monomer a) is selected from the compounds of the formula I

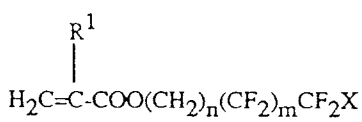
(I)

in which $R^1$ is hydrogen or methyl, n is a number from 1 to 4, m is a number from 0 to 19, X is hydrogen or fluorine, with the proviso that X is fluorine when m is 0; as well as from hexafluoroisopropyl acrylate, hexafluoroisopropyl methacrylate and 2,3,4,5-6-penta-fluorostyrene.

3. A process for the preparation of a hydrogel according to claim 1, wherein the polyhydroxy vinyl monomer b) whose hydroxyl groups are in protected form is a vinyl monomer which is derived from a saccharide or a sugar alcohol, and has either formula II

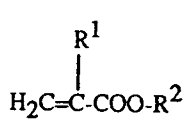
(II)

in which $R^1$ is hydrogen or methyl, and $R^2$ is a saccharide residue whose hydroxyl groups are in protected form, or formula III

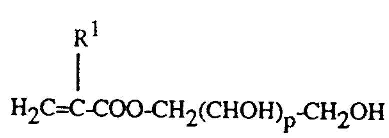
(III)

in which $R^1$ is hydrogen or methyl, p is a number from 1 to 8, and in which the hydroxyl groups are in protected form.

**4.** A process for the preparation of a hydrogel according to claim 1, wherein the vinyl monomer c) is selected from among acrylates and methacrylates of the formula:

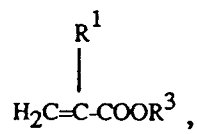

in which $R^1$ is hydrogen or methyl, and $R^3$ is a hydrocarbon radical which has 1 to 10 carbon atoms and is substituted one or more times by a group which confers solubility in water, such as carboxyl, hydroxyl or tert-amino, a polyethylene oxide group with 2-100 repeating units, or by a sulfate, phosphate, sulfonate or phosphonate group, as well as acrylamides and methacrylamides of the formula

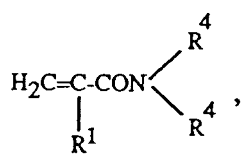

in which $R^4$ is hydrogen or $C_1$-$C_4$alkyl; acrylamides and methacrylamides of the formula

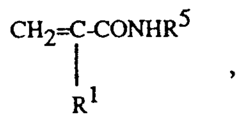

in which $R^5$ has the meaning of $R^3$ or $R^4$; maleates and fumarates of the formula

$R^3OOC\text{-}CH = CH\text{-}COOR^3$;

crotonates of the formula

$CH_3\text{-}CH = CH\text{-}COOR^3$;

vinyl ethers of the formula

$H_2C = CH\text{-}OR^3$ ;

vinyl-substituted five- or six-membered heterocycles with one or two nitrogen atoms, especially N-vinyllactams with 4-6 carbon atoms, and carboxylic acids with vinyl unsaturation and a total of 3-10 carbon atoms.

**5.** A process for the preparation of a hydrogel according to claim 1, wherein the vinyl monomer a) is selected from the compounds of the formula I

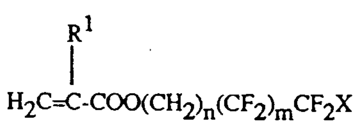

(I)

in which $R^1$ is hydrogen or methyl, n is a number from 1 to 4, m is a number from 0 to 19, X is hydrogen or fluorine; with the proviso that X is fluorine when m is 0; as well as from hexafluoroisopropyl acrylate, hexafluoroisopropyl methacrylate and 2,3,4,5,6-penta-fluorostyrene,
the polyhydroxy vinyl monomer b) whose hydroxyl groups are in protected form is a vinyl monomer which is derived from a saccharide or a sugar alcohol, and has either formula II

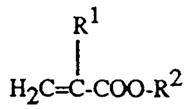

(II)

in which $R^1$ is hydrogen or methyl, and $R^2$ is a saccharide residue whose hydroxyl groups are in protected form, or formula III

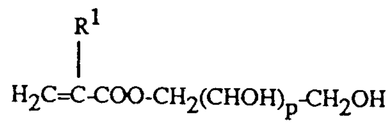

(III)

in which $R^1$ is hydrogen or methyl, p is a number from 1 to 8, and in which the hydroxyl groups are in protected form
and the vinyl monomer c) is selected from acrylates and methacrylates of the formula:

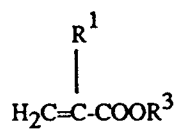 ,

in which $R^1$ is hydrogen or methyl, and $R^3$ is a hydrocarbon radical which has 1 to 10 carbon atoms and is substituted one or more times by a group which confers solubility in water, such as carboxyl, hydroxyl or tert-amino, a polyethylene oxide group with 2-100 repeating units, or by a sulfate, phosphate, sulfonate or phosphonate group, as well as from acrylamides and methacrylamides of the formula

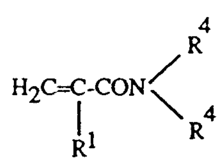 ,

in which $R^4$ is hydrogen or $C_1$-$C_4$-alkyl; acrylamides and methacrylamides of the formula

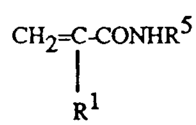 ,

in which $R^5$ has the meaning of $R^3$ or $R^4$; maleates and fumarates of the formula

$R^3OOC-CH = CH-COOR^3$;

crotonates of the formula

$CH_3$-CH = CH-COOR$^3$;

vinyl ethers of the formula

$H_2C$ = CH-OR$^3$

and N-vinyllactams.

**6.** A process for the preparation of a hydrogel according to claim 1, in which the hydroxyl groups of the segments formed by the monomers b) are in protected form or partially in protected form.

**7.** A process for the preparation of a hydrogel according to claim 1, in which the hydroxyl groups of the segments formed by the monomers b) are in free form.

**8.** A process for the preparation of a hydrogel according to claim 1, wherein the monomer mixture contains
10-80 mol-% vinyl monomers a),
10-70 mol-% vinyl monomers b) and
10-60 mol-% vinyl monomers c).

**9.** A process for the preparation of a hydrogel according to claim 8, wherein the monomer mixture contains
20-60 mol-% vinyl monomers a),
20-60 mol-% vinyl monomers b) and
20-40 mol-% vinyl monomers c).

**10.** A process for the preparation of a hydrogel according to claim 9, wherein the monomer mixture contains 30 mol-% vinyl monomers a) and/or 30 mol-% vinyl monomers b).

**11.** A process for the preparation of a hydrogel according to either of claims 2 or 5, wherein the vinyl monomer a) has the formula I in which $R^1$ is methyl, n is 1 or 2, m is 1 to 4, and X is fluorine.

**12.** A process for the preparation of a hydrogel according to claim 11, wherein the vinyl monomer a) is 2,2,3,3,4,4,4-heptafluorobutyl methacrylate.

**13.** A process for the preparation of a hydrogel according to either of claims 3 or 5, wherein the vinyl monomer b) is a compound of the formula II in which $R^2$ is selected from the residues of the monosaccharides erythrose, threose, arabinose, ribose, xylose, glucose, mannose, galactose, fructose and sorbose.

**14.** A process for the preparation of a hydrogel according to either of claims 3 or 5, wherein the vinyl monomer b) is a compound of the formula III which is derived from a sugar alcohol selected from xylitol, adonitol, arabitol, sorbitol, mannitol and dulcitol.

**15.** A process for the preparation of a hydrogel according to either of claims 13 or 14, wherein the vinyl monomer b) is selected from:
3-O-acryloyl-1,2;5,6-di-O-isopropylidene-α-D-(-)-glucofuranose (3-ADPGlu),
1-O-methacryloyl-2,3;4,5-di-O-isopropylidene-β-D-(-)-fructopyranose (1-MDPFru),
1-O-acryloyl-2,3;4,5-di-O-isopropylidene-β-D-(-)fructopyranose (1-ADPFru),
3-O-methacryloyl-di-O-isopropylidene-β-D-fructopyranose (3-MDPFru),
3-O-acryloyl-di-O-isopropylidene-β-D-fructopyranose (3-ADPFru),
1-O-methacryloyl-2,3;4,6-di-O-isopropylidene-α-L-(-)-sorbofuranose (1-MDPSorb),
1-O-acryloyl-2,3;4,6-di-O-isopropylidene-α-L-(-)-sorbofuranose (1-ADPSorb),
5-O-methacryloyl-1,2;3,4-di-O-isopropylidene-DL-xylitol (5-MDPXy) and
5-O-acryloyl-1,2;3,4-di-O-isopropylidene-DL-xylitol (5-ADPXy).

**16.** A process for the preparation of a hydrogel according to either of claims 1 to 4, wherein the vinyl monomer c) is selected from hydroxyl-substituted $C_2$-$C_4$ alkyl (meth)acrylates, five- to seven-membered

N-vinyllactams, N,N-di-$C_1$-$C_4$ alkyl (meth)acrylamides and carboxylic acids with vinyl unsaturation and a total of 3 to 5 carbon atoms.

**17.** A process for the preparation of a hydrogel according to claim 16, wherein the vinyl monomer c) is selected from 2-hydroxyethyl methacrylate, N-vinyl-2-pyrrolidone, N,N-dimethylacrylamide as well as acrylic and methacrylic acid.

**18.** A process for the preparation of a hydrogel according to claim 1, wherein the vinyl monomer a) is 2,2,3,3,4,4,4-heptafluorobutyl methacrylate, the vinyl monomer b) is selected from 3-O-acryloy1-1,2;5,6-di-O-isopropylidene-α-D-(-)-glucofuranose (3-ADPGlu), 1-O-methacryloyl-2,3; 4,5-di-O-isopropylidene-β-D-(-)-fructopyranose (1-MDPFru), 1-0-acryloyl-2,3; 4,5-di-O-isopropylidene-β-D-(-)-fructopyranose (1-ADPFru),
3-O-methacryloyl-di-O-isopropylidene-β-D-fructopyranose (3-MDPFru),
3-O-acryloyl-di-O-isopropylidene-β-D-fructopyranose (3-ADPFru),
1-O-methacryloyl-2,3;4,6-di-O-isopropylidene-α-L-(-)-sorbofuranose (1-MDPSorb),
1-O-acryloyl-2,3;4,6-di-O-isopropylidene-α-L-(-)-sorbofuranose (1-ADPSorb),
5-O-methacryloyl-1,2;3,4-di-O-isopropylidene-DL-xylitol (5-MDPXy) and 5-O-acryloyl-1,2;3,4-di-O-isopropylidene-DL-xylitol (5-ADPXy)
and the vinyl monomer c) is selected from 2-hydroxyethyl methacrylate and N-vinyl-2-pyrrolidone.

**19.** A contact lens essentially consisting of a hydrogel according to one of claims 1 to 18.

**20.** An intraocular lens essentially consisting of a hydrogel according to one of claims 1 to 18.

**21.** The use of a hydrogel according to one of claims 1 to 18 for the production of a contact lens.

**22.** The use of a hydrogel according to one of claims 1 to 18 for the production of an intraocular lens.

**23.** A process for the preparation of a hydrogel according to one of claims 1 to 18 by radical copolymerization.

**24.** A process for the preparation of a hydrogel as defined in claim 7 by radical copolymerization and acid hydrolysis of the hydroxyl protective groups.

**25.** A process for the production of a contact lens essentially consisting of a hydrogel according to one of claims 1 to 18 by radical copolymerization and subsequent mechanical processing in a manner known per se.

## Revendications

## Revendications pour les Etats contractants suivants : AT, BE, CH, DE, FR, GB, GR, IT, LI, LU, NL, SE

**1.** Hydrogel qui est un copolymère choisi dans un mélange de monomères polymérisables, qui contient
a) 2-85 % molaire d'un monomère de vinyle hydrophobe ayant au moins 3 atomes de fluor,
b) 2-80% molaire d'un monomère de polyhydroxyvinyle hydrophobe, dont les groupes hydroxy se présentent sous forme protégée,
c) 2-70% molaire d'un monomère de vinyle hydrophile,
d) par rapport à la quantité totale des monomères a)-c), 0-5% molaire d'un agent réticulant, dans lequel hydrogel les groupes hydroxy des segments formés par les monomères b) se présentent sous forme protégée ou sous forme libre.

**2.** Hydrogel selon la revendication 1, caractérisé en ce que le monomère de vinyle a) est choisi parmi les composés de formule 1

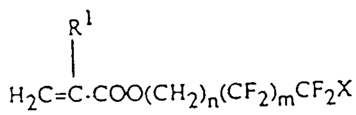

(I)

dans laquelle $R^1$ représente un hydrogène ou un méthyle,
n représente un nombre valant de 1 à 4,
m représente un nombre valant de 0 à 19,
X représente un hydrogène ou un fluor ; sous réserve que X représente un fluor lorsque n vaut 0 ;
ainsi que parmi l'acrylate d'hexafluoropropyle, le méthacrylate d'hexafluoroisopropyle et le 2,3,4,5,6-pentafluorostyrène.

**3.** Hydrogel selon la revendication 1, caractérisé en ce que le monomère de polyhydroxyvinyle b) dont les groupes hydroxy se présentent sous forme protégée est un monomère de vinyle qui dérive d'un saccharide ou d'un alcool de sucre et présente ou bien la formule II

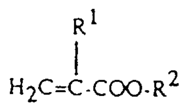

(II)

dans laquelle $R^1$ représente un hydrogel ou un méthyle et $R^2$ un radical saccharide dont les groupes hydroxy se présentent sous forme protégée, ou bien la formule III

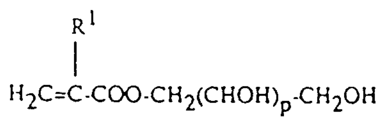

(III)

dans laquelle $R^1$ représente un hydrogel ou un méthyle, p représente un nombre valant de 1 à 8 et les groupes hydroxy se présentent sous forme protégée.

**4.** Hydrogel selon la revendication 1, caractéricé en ce que le monomère de vinyle c) est choisi parmi les acrylates et méthacrylates de formule :

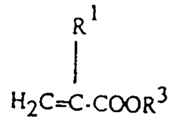,

dans laquelle $R^1$ représente un hydrogène ou un méthyle et $R^3$ représente un radical hydrocarboné mono ou polysubstitué par un groupe le rendant soluble dans l'eau comme carboxy, hydroxy ou amino tertiaire, un groupe oxyde de polyéthylène comportant de 2 à 100 motifs ou un groupe sulfate, phosphate, sulfonate ou phosphonate, ce radical hydrocarboné ayant de 1 à 10 atomes de carbones, ou encore les acrylamides et méthacrylamides de formule

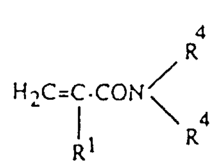,

dans laquelle $R^4$ représente un hydrogène ou un alkyle en $C_1$ à $C_4$ ;
les acrylamides et méthacrylamides de formule

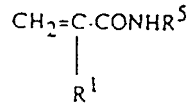

,

dans laquelle $R^5$ a la signification de $R^3$ ou $R^4$ ;
les maléinates et fumarates de formule

$R^3OOC\text{-}CH=CH\text{-}COOR^3$;

les crotonates de formule

$CH_3\text{-}CH=CH\text{-}COOR^3$;

les éthers de vinyle de formule

$H_2C=CH\text{-}OR^3$;

les hétérocycles à 5 ou 6 chaînons à substitution vinyle comportant un ou deux atomes d'azote, en particulier les N-vinyllactames en $C_4$ à $C_6$ , et les acides carboxyliques vinyliquement insaturés ayant au total de 3 à 10 atomes de carbone.

**5.** Hydrogel selon la revendication 1, caractérisé en ce que le monomère de vinyle a) est choisi parmi les composés de formule I,

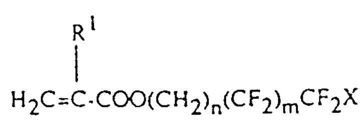

(I)

dans laquelle $R^1$ représente un hydrogène ou un méthyle,
n représente un nombre valant de 1 à 4,
m représene un nombre valant de 0 à 19,
x représente un hydrogène ou un fluor ; sous réserve que X représente un fluor lorsque n vaut 0 ; ainsi que parmi l'acrylate d'hexafluoropropyle, le méthacrylate d'hexafluoroisopropyle et le 2, 3, 4, 5, 6-pentafluorostyrène,
en ce que le monomére de polyhydroxyvinyle b), dont les groupes hydroxy se présentent sous forme protégée, est un monomère de vinyle qui dérive d'un saccharide ou d'un alcool de sucre et présente soit la formule II

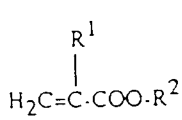

(II)

dans laquelle $R^1$ représente un hydrogène ou un méthyle et $R^2$ représente un radical saccharide dont les groupes hydroxy se présentent sous forme protégée, soit la formule III,

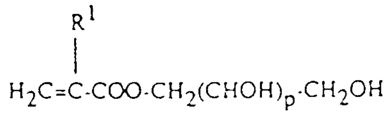

(III)

dans laquelle $R^1$ représente un hydrogéne ou un méthyle, p représente un nomore valant de 1 à 8 et où les groupes hydroxy se présentent sous forme protégée,
et en ce que le monomère de vinyle c) est choisi parmi les acrylates et méthacrylates de formule :

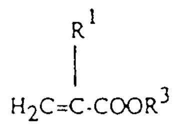

,

dans laquelle $R^1$ représente un hydrogène ou un méthyle et $R^3$ représente un radical hydrocarboné mono ou polysubstitué par un groupe le rendant soluble dans l'eau comme un carboxy, hydroxy ou amino tertiaire, un groupe oxyde de polyéthylène comportant de 2 à 100 motifs ou un groupe sulfate, phosphate, sulfonate ou phosphonate, ce radical hydrocarboné ayant de 1 à 10 atomes de carbone, ou encore les acrylamides et méthacrylamides de formule

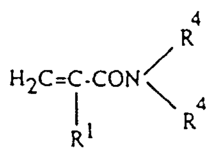

,

dans laquelle $R^4$ représente un hydrogène ou un alkyle en $C_1$ à $C_4$ ;
les acrylamides et méthacrylamides de formule

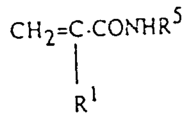

,

dans laquelle $R^5$ a la signification de $R^3$ ou $R^4$ ;
les maléinates et fumarates de formule

$R^3OOC\text{-}CH=CH\text{-}COOR^3$;

les crotonates de formule

$CH_3\text{-}CH=CH\text{-}COOR^3$;

les éthers de vinyle de formule

$H_2C=CH\text{-}OR^3$

et les N-vinyllactames.

6. Hydrogel selon la revendication 1, où les groupes hydroxy des segments formés par les monomères b) se présentent sous forme protégée ou partiellement protégée.

7. Hydrogel selon la revendication 1, où les groupes hydroxy des segments formés par les monomères b) se présentent sous forme libre.

**8.** Hydrogel selon la revendication 1, caractérisé en ce que le mélange de monomères contient
10-80% molaire de monomère de vinyle a)
10-70% molaire de monomère de vinyle b) et
10-60% molaire d emonomère de vinyle c).

**9.** Hydrogel selon la revendication 8, caractérisé en ce que le mélange de monomères contient
20-60% molaire de monomère de vinyle a)
20-60% molaire de monomère de vinyle b) et
20-40% molaire de monomère de vinyle c)

**10.** Hydrogel selon la revendication 9, caractérisé en ce que le mélange de monomères contient 30% molaire de monomère de vinyle a) et/ou 30% molaire de monomère de vinyle b).

**11.** Hydrogel selon l'une des revendications 2 ou 5 , caractérisé en ce que le monomère de vinyle a) présente la formule I dans laquelle $R^1$ représente un méthyle, n vaut 1 ou 2, m vaut de 1 à 4 et X représente un fluor.

**12.** Hydrogel selon la revendication 11, caractérisé en ce que le monomère de vinyle a) est le méthacrylate de 2,2,3,3,4,4,4-heptafluorobutyle.

**13.** Hydrogel selon l'une des revendications 3 ou 5, caractérisé en ce que le monomère de vinyle b) est un composé de formule II dans laquelle $R^2$ est choisi parmi les radicaux des monosaccharides érythrose, thréose, aabinose, ribose, xylose, glucose, mannose, galactose, fructose et sorbose.

**14.** Hydrogel selon l'une des revendications 3 ou 5, caractérisé en ce que le monomère de vinyle b) est un composé de formule III qui est dérivé d'un alcool de sucre choisi parmi le xylitol, l'adonitol, l'arabitol, le sorbitol, le mannitol et le dulcitol.

**15.** Hydrogel selon la revendication 13 ou 14, caractérisé en ce que le monomère de vinyle b) est choisi parmi les composés suivants :
3-O-acryloyl-1,2;5,6-di-O-isopropylidène-$\alpha$-D-(-)glucofurannose(3-ADPGlu),
1-O-méthacryloyl-2,3;4,5-di-O-isopropylidène-$\beta$-D-(-)-fructopyranose(1-MDPFru),
1-O-acryloyl-2,3;4,5-di-O-isopropylidène-$\beta$-D-(-)-fructopyranose(1-ADPFru),
3-O-méthacryloyl-di-O-isopropylidène-$\beta$-D-fructopyranose(3-MDPFru),
3-O-acryloyl-di-O-isopropylidène-$\beta$-D-fructopyranose(3-ADPFru),
1-O-méthacryloyl-2,3;4,6-di-O-isopropylidène-$\alpha$-L-(-)-sorbofurannose(1-MDPSorb),
1-O-acryloyl-2,3;4,6-di-O-isopropylidène-$\alpha$-L-(-)-sorbofurannose(1-ADPSorb),
5-O-méthacryloyl-1,2;3,4-di-O-isopropylidène-DL-xylitol(5-MDPXy), et
5-O-acryloyl-1,2;3,4-di-O-isopropylidène-DL-xylitol(5-ADPXy).

**16.** Hydrogel selon l'une des revendications 1 ou 4, caractérisé en ce que le monomère de vinyle c) est choisi parmi les (méth)acrylates d'alkyle en $C_2$ à $C_4$ substitués par un hydroxy, les N-vinyllactames à 5 à 7 chaînons, les N,N-di-alkyle en $C_1$ à $C_4$(méth)acrylamides et les acides carboxyliques vinyliquement insaturés ayant au total de 3 à 5 atomes de carbone.

**17.** Hydrogel selon la revendication 16, caractérisé en ce que le monomère de vinyle c) est choisi parmi le méthacrylate de 2-hydroxyéthyle, la N-vinyl-2-pyrrolidone, le N,N-diméthylacrylamide ainsi que l'acide acrylique et l'acide méthacrylique.

**18.** Hydrogel selon la revendication 1, caractérisé en ce que le monomère de vinyle a) est le méthacrylate de 2,2,3,3,4,4,4-heptafluorobutyle, le monomère de vinyle b) est choisi parmi les composés suivants :
3-O-acryloyl-1,2;5,6-di-O-isopropylidène-$\alpha$-D-(-)glucofurannose(3-ADPGlu),
1-O-méthacryloyl-2,3;4,5-di-O-isopropylidène-$\beta$-D-(-)-fructopyranose(1-MDPFru),
1-O-acryloyl-2,3;4,5-di-O-isopropylidène-$\beta$-D-(-)-fructopyranose(1-ADPFru),
3-O-méthacryloyl-di-O-isopropylidène-$\beta$-D-fructopyranose(3-MDPFru),
3-O-acryloyl-di-O-isopropylidène-$\beta$-D-fructopyranose(3-ADPFru),
1-O-méthacryloyl-2,3;4,6-di-O-isopropylidène-$\alpha$-L-(-)-sorbofurannose(1-MDPSorb),
1-O-acryloyl-2,3;4,6-di-O-isopropylidène-$\alpha$-L-(-)-sorbofurannose(1-ADPSorb),

5-O-méthacryloyl-1,2;3,4-di-O-isopropylidène-DL-xylitol(5-MDPXy), et
5-O-acryloyl-1,2;3,4-di-O-isopropylidène-DL-xylitol(5-ADPXy).
et le monomère de vinyle c) est choisi parmi le méthacrylate de 2-hydroxyéthyle et la N-vinyl-2-pyrrolidone.

**19.** Lentille de contact constituée pour l'essentiel d'un hydrogel selon l'une des revendications 1 à 18.

**20.** Lentille intraoculaire constituée pour l'essentiel d'un hydrogel selon l'une des revendications 1 à 18.

**21.** Application d'un hydrogel selon l'une des revendications 1 à 18 à la préparation d'un lentille de contact.

**22.** Application d'un hydrogel selon l'une des revendications 1 à 18 à la préparation d'une lentille intraoculaire.

**23.** Procédé de préparation d'un hydrogel selon l'une des revendications 1 à 18 par copolymérisation radicalaire.

**24.** Procédé de préparation d'un hydrogel selon la revendication 7 par copolymérisation radicalaire et hydrolyse acide des groupes protecteurs d'hydroxy.

**25.** Procédé de préparation d'une lentille de contact constituée pour l'essentiel d'un hydrogel selon l'une des revendications 1 à 18 par copolymérisation radicalaire puis par traitement mécanique de façon connue.

**Revendications pour l'Etat contractant suivant : ES**

**1.** Procédé de préparation d'un hydrogel qui est un copolymère choisi dans un mélange de monomères polymérisables, qui contient
a) 2-85 % molaire d'un monomère de vinyle hydrophobe ayant au moins 3 atomes de fluor,
b) 2-80% molaire d'un monomère de polyhydroxyvinyle hydrophobe, dont les groupes hydroxy se présentent sous forme protégée,
c) 2-70% molaire d'un monomère de vinyle hydrophile,
d) par rapport à la quantité totale des monomères a)-c), 0-5% molaire d'un agent réticulant, dans lequel hydrogel les groupes hydroxy des segments formés par les monomères b) se présentent sous forme protégée ou sous forme libre, caractérisé en ce qu'on mélange et en ce qu'on polymérise les composants correspondants de façon classique.

**2.** Procédé de préparation d'un hydrogel selon la revendication 1, caractérisé en ce que le monomère de vinyle a) est choisi parmi les composés de formule I

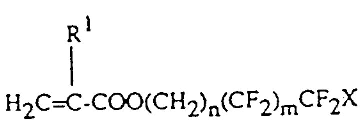

(I)

dans laquelle $R^1$ représente un hydrogène ou un méthyle,
n représente un nombre valant de 1 à 4,
m représente un nombre valant de 0 à 19,
X représente un hydrogène ou un fluor ; sous réserve que X représente un fluor lorsque n vaut 0 ;
ainsi que parmi l'acrylate d'hexafluoropropyle, le méthacrylate d'hexafluoroisopropyle et le 2,3,4,5,6-pentafluorostyrène.

**3.** Procéde de préparation d'un hydrogel selon la revendication 1, caractérisé en ce que le monomère de polyhydroxyvinyle b) dont les groupes hydroxy se présentent sous forme protégée est un monomère de vinyle qui dérive d'un saccharide ou d'un alcool de sucre et présente ou bien la formule II

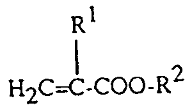

(II)

dans laquelle $R^1$ représente un hydrogel ou un méthyle et $R^2$ un radical saccharide dont les groupes hydroxy se présentent sous forme protégée, ou bien la formule III

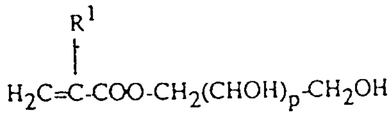

(III)

dans laquelle $R^1$ représente un hydrogel ou un méthyle, p représente un nombre valant de 1 à 8 et les groupes hydroxy se présentent sous forme protégée.

**4.** Procédé de préparation d'un hydrogel selon la revendication 1, caractéricé en ce que le monomère de vinyle c) est choisi parmi les acrylates et méthacrylates de formule :

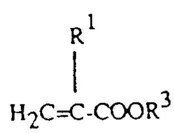

,

dans laquelle $R^1$ représente un hydrogène ou un méthyle et $R^3$ représente un radical hydrocarboné mono ou polysubstitué par un groupe le rendant soluble dans l'eau comme carboxy, hydroxy ou amino tertiaire, un groupe oxyde de polyéthylène comportant de 2 à 100 motifs ou un groupe sulfate, phosphate, sulfonate ou phosphonate, ce radical hydrocarboné ayant de 1 à 10 atomes de carbones, ou encore les acrylamides et méthacrylamides de formule

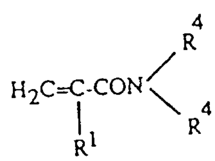

,

dans laquelle $R^4$ représente un hydrogène ou un alkyle en $C_1$ à $C_4$ ;
les acrylamides et méthacrylamides de formule

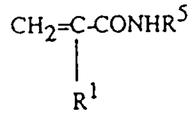

,

dans laquelle $R^5$ a la signification de $R^3$ ou $R^4$ ;
les maléinates et fumarates de formule

$R^3OOC\text{-}CH = CH\text{-}COOR^3$;

les crotonates de formule

$CH_3\text{-}CH = CH\text{-}COOR^3$;

les éthers de vinyle de formule

$H_2C=CH\text{-}OR^3$;

les hétérocycles à 5 ou 6 chaînons à substitution vinyle comportant un ou deux atomes d'azote, en particulier les N-vinyllactames en $C_4$ à $C_6$ , et les acides carboxyliques vinyliquement insaturés ayant au total de 3 à 10 atomes de carbone.

**5.** Procédé de préparation d'un hydrogel selon la revendication 1, caractérisé en ce que le monomère de vinyle a) est choisi parmi les composés de formule I,

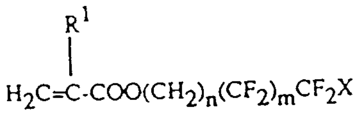

(I)

dans laquelle $R^1$ représente un hydrogène ou un méthyle,
n représente un nombre valant de 1 à 4,
m représene un nombre valant de 0 à 19,
X représente un hydrogène ou un fluor ; sous réserve que X représente un fluor lorsque n vaut 0 ; ainsi que parmi l'acrylate d'hexafluoropropyle, le méthacrylate d'hexafluoroisopropyle et le 2, 3, 4, 5, 6-pentafluorostyrène,
en ce que le monomère de polyhydroxyvinyle b), dont les groupes hydroxy se présentent sous forme protégée, est un monomère de vinyle qui dérive d'un saccharide ou d'un alcool de sucre et présente soit la formule II

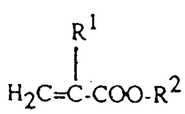

(II)

dans laquelle $R^1$ représente un hydrogène ou un méthyle et $R^2$ représente un radical saccharide dont les groupes hydroxy se présentent sous forme protégée, soit la formule III,

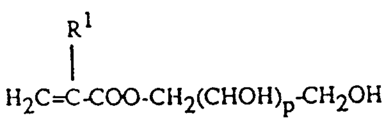

(III)

dans laquelle $R^1$ représente un hydrogène ou un méthyle, p représente un nombre valant de 1 à 8 et où les groupes hydroxy se présentent sous forme protégée, et en ce que le monomère de vinyle c) est choisi parmi les acrylates et méthacrylates de formule :

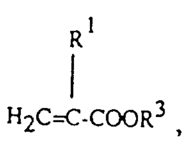

dans laquelle $R^1$ représente un hydrogène ou un méthyle et $R^3$ représente un radical hydrocarboné mono ou polysubstitué par un groupe le rendant soluble dans l'eau comme un carboxy, hydroxy ou amino tertiaire, un groupe oxyde de polyéthylène comportant de 2 à 100 motifs ou un groupe sulfate,

phosphate, sulfonate ou phosphonate, ce radical hydrocarboné ayant de 1 à 10 atomes de carbone, ou encore les acrylamides et méthacrylamides de formule

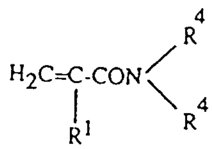

,

dans laquelle $R^4$ représente un hydrogène ou un alkyle en $C_1$ à $C_4$ ;
les acrylamides et méthacrylamides de formule

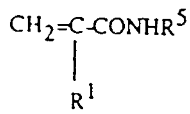

,

dans laquelle $R^5$ a la signification de $R^3$ ou $R^4$ ;
les maléinates et fumarates de formule

$R^3OOC-CH=CH-COOR^3$;

les crotonates de formule

$CH_3-CH=CH-COOR^3$;

les éthers de vinyle de formule

$H_2C=CH-OR^3$

et les N-vinyllactames.

**6.** Procédé de préparation d'un hydrogel selon la revendication 1, où les groupes hydroxy des segments formés par les monomères b) se présentent sous forme protégée ou partiellement protégée.

**7.** Procédé de préparation d'un hydrogel selon la revendication 1, où les groupes hydroxy des segments formés par les monomères b) se présentent sous forme libre.

**8.** Procédé de préparation d'un hydrogel selon la revendication 1, caractérisé en ce que le mélange de monomères contient
10-80% molaire de monomère de vinyle a)
10-70% molaire de monomère de vinyle b) et
10-60% molaire de monomère de vinyle c).

**9.** Procédé de préparation d'un hydrogel selon la revendication 8, caractérisé en ce que le mélange de monomères contient
20-60% molaire de monomère de vinyle a)
20-60% molaire de monomère de vinyle b) et
20-40% molaire de monomère de vinyle c)

**10.** Procédé de préparation d'un hydrogel selon la revendication 9, caractérisé en ce que le mélange de monomères contient 30% molaire de monomère de vinyle a) et/ou 30% molaire de monomère de vinyle b).

**11.** Procédé de préparation d'un hydrogel selon l'une des revendications 2 ou 5 , caractérisé en ce que le monomère de vinyle a) présente la formule I dans laquelle $R^1$ représente un méthyle, n vaut 1 ou 2, m vaut de 1 à 4 et X représente un fluor.

**12.** Procédé de préparation d'un hydrogel selon la revendication 11, caractérisé en ce que le monomère de vinyle a) est le méthacrylate de 2,2,3,3,4,4,4-heptafluorobutyle.

**13.** Procédé de préparation d'un hydrogel selon l'une des revendications 3 ou 5, caractérisé en ce que le monomère de vinyle b) est un composé de formule II dans laquelle $R^2$ est choisi parmi les radicaux des monosaccharides érythrose, thréose, aabinose, ribose, xylose, glucose, mannose, galactose, fructose et sorbose.

**14.** Procédé de préparation d'un hydrogel selon l'une des revendications 3 ou 5, caractérisé en ce que le monomère de vinyle b) est un composé de formule III qui est dérivé d'un alcool de sucre choisi parmi le xylitol, l'adonitol, l'arabitol, le sorbitol, le mannitol et le dulcitol.

**15.** Procédé de préparation d'un hydrogel selon la revendication 13 ou 14, caractérisé en ce que le monomère de vinyle b) est choisi parmi les composés suivants :
3-O-acryloyl-1,2;5,6-di-O-isopropylidène-α-D-(-)glucofurannose(3-ADPGlu),
1-O-méthacryloyl-2,3;4,5-di-O-isopropylidène-β-D-(-)-fructopyranose(1-MDPFru),
1-O-acryloyl-2,3;4,5-di-O-isopropylidène-β-D-(-)-fructopyranose(1-ADPFru),
3-O-méthacryloyl-di-O-isopropylidène-β-D-fructopyranose(3-MDPFru),
3-O-acryloyl-di-O-isopropylidène-β-D-fructopyranose(3-ADPFru),
1-O-méthacryloyl-2,3;4,6-di-O-isopropylidène-α-L-(-)-sorbofurannose(1-MDPSorb),
1-O-acryloyl-2,3;4,6-di-O-isopropylidène-α-L-(-)-sorbofurannose(1-ADPSorb),
5-O-méthacryloyl-1,2;3,4-di-O-isopropylidène-DL-xylitol(5-MDPXy), et
5-O-acryloyl-1,2;3,4-di-O-isopropylidène-DL-xylitol(5-ADPXy).

**16.** Procédé de préparation d'un hydrogel selon l'une des revendications 1 ou 4, caractérisé en ce que le monomère de vinyle c) est choisi parmi les (méth)acrylates d'alkyle en $C_2$ à $C_4$ substitués par un hydroxy, les N-vinyllactames à 5 à 7 chaînons, les N,N-di-alkyle en $C_1$ à $C_4$(méth)acrylamides et les acides carboxyliques vinyliquement insaturés ayant au total de 3 à 5 atomes de carbone.

**17.** Procédé de préparation d'un hydrogel selon la revendication 16, caractérisé en ce que le monomère de vinyle c) est choisi parmi le méthacrylate de 2-hydroxyéthyle, la N-vinyl-2-pyrrolidone, le N,N-diméthylacrylamide ainsi que l'acide acrylique et l'acide méthacrylique.

**18.** Procédé de préparation d'un hydrogel selon la revendication 1, caractérisé en ce que le monomère de vinyle a) est le méthacrylate de 2,2,3,3,4,4,4-heptafluorobutyle, le monomère de vinyle b) est choisi parmi les composés suivants :
3-O-acryloyl-1,2;5,6-di-O-isopropylidène-α-D-(-)glucofurannose(3-ADPGlu),
1-O-méthacryloyl-2,3;4,5-di-O-isopropylidène-β-D-(-)-fructopyranose(1-MDPFru),
1-O-acryloyl-2,3;4,5-di-O-isopropylidène-β-D-(-)-fructopyranose(1-ADPFru),
3-O-méthacryloyl-di-O-isopropylidène-β-D-fructopyranose(3-MDPFru),
3-O-acryloyl-di-O-isopropylidène-β-D-fructopyranose(3-ADPFru),
1-O-méthacryloyl-2,3;4,6-di-O-isopropylidène-α-L-(-)-sorbofurannose(1-MDPSorb),
1-O-acryloyl-2,3;4,6-di-O-isopropylidène-α-L-(-)-sorbofurannose(1-ADPSorb),
5-O-méthacryloyl-1,2;3,4-di-O-isopropylidène-DL-xylitol(5-MDPXy), et
5-O-acryloyl-1,2;3,4-di-O-isopropylidène-DL-xylitol(5-ADPXy).
et le monomère de vinyle c) est choisi parmi le méthacrylate de 2-hydroxyéthyle et la N-vinyl-2-pyrrolidone.

**19.** Lentille de contact constituée pour l'essentiel d'un hydrogel selon l'une des revendications 1 à 18.

**20.** Lentille intraoculaire constituée pour l'essentiel d'un hydrogel selon l'une des revendications 1 à 18.

**21.** Application d'un hydrogel selon l'une des revendications 1 à 18 à la préparation d'un lentille de contact.

**22.** Application d'un hydrogel selon l'une des revendications 1 à 18 à la préparation d'une lentille intraoculaire.

**23.** Procédé de préparation d'un hydrogel selon l'une des revendications 1 à 18 par copolymérisation radicalaire.

**24.** Procédé de préparation d'un hydrogel selon la revendication 7 par copolymérisation radicalaire et hydrolyse acide des groupes protecteurs d'hydroxy.

**25.** Procédé de préparation d'une lentille de contact constituée pour l'essentiel d'un hydrogel selon l'une des revendications 1 à 18 par copolymérisation radicalaire puis par traitement mécanique de façon connue.